# EUROPEAN PATENT APPLICATION

(11) **EP 1 867 401 A1**
(43) Date of publication of application: **19.12.2007**
(21) Application number: 06730904.7
(22) Date of filing: 31.03.2006
(51) Int. Cl.: B05D 7/24, B05D 5/00, B32B 27/00, C09D 5/00, C09D 183/04

(54) **TIE COAT FOR ORGANOPOLYSILOXANE ANTIFOULING COAT, COMPOSITE COATS, AND SHIPS AND UNDERWATER STRUCTURES COVERED WITH THE COMPOSITE COATS**

(30) Priority: 05.04.2005 JP 2005108621; 30.05.2005 JP 2005157431
(71) Applicant: CHUGOKU MARINE PAINTS, LTD., Ohtake-shi, Hiroshima 739-0652 (JP)
(72) Inventor: YUKI, Shuuhei, Ohtake-shi, Hiroshima 7390652 (JP); ONO, Masashi, Ohtake-shi, Hiroshima 7390652 (JP); TASHIRO, Shinnichi, Ohtake-shi, Hiroshima 7390652 (JP); DOI, Masakazu, Ohtake-shi, Hiroshima 7390652 (JP)
(74) Representative: HOFFMANN EITLE
(86) International application number: PCT/JP2006/306956
(87) International publication number: WO 2006/109600

(57) **Abstract**

Disclosed is a tie coat which is formed on a surface of a base or an undercoating film prior to formation of an organopolysiloxane-based antifouling coating film and is formed from a moisture-curing organopolysiloxane-based composition comprising (b1) organopolysiloxane having condensing functional groups at both ends of a molecule and/or (b2) a curing composition formed by subjecting the component (b1) and an extender pigment selected from the group consisting of silica, calcium carbonate, talc, mica, clay, kaolin and barium sulfate to contact treatment with heating or without heating. Also disclosed is a composite coating film wherein on a surface of the above tie coat is formed a finish coat formed from a three-pack type orgnaopolysiloxane-based curing composition comprising (c1) a main agent comprising the component (b1), (c2) a curing agent component comprising tetraalkoxysilicate or its condensate and (c3) a curing accelerator component comprising a metallic compound. Further disclosed is a composite coating film wherein an epoxy-based sealer coat, the tie coat and the finish coat are formed in this order on a surface of an old antifouling coating film (G). There is provided by the invention a tie coat capable of forming a composite coating film having excellent interlaminar bond property. The composite coating film is favorably formed on a surface of a base, an undercoating film, an old antifouling coating film or the like, has excellent interlaminar bond strength and antifouling property and is preferably used for coating outer surfaces of ships, submerged parts of marine structures, water supply/drainage channels of atomic power plant, etc.

## Description

### TECHNICAL FIELD

The present invention relates to a tie coat for an organopolysiloxane-based antifouling coating film, a composite coating film, and a ship and an underwater structure coated with the coating film.

More particularly, the invention relates to a tie coat (bonding film, primer coat) which is formed on a surface of a base, an undercoating film or the like (these are also referred together to as "base or the like") prior to formation of an organopolysiloxane-based antifouling coating film substantially containing no antifouling agent and being a small burden to the environment, and which exhibits excellent adhesion to the base present below the lower surface of the tie coat and excellent adhesion to the organopolysiloxane-based antifouling coating film present on the upper surface of the tie coat. The invention also relates to a composite coating film which is constituted of two or more films (layers) formed on a base surface, has an outermost layer (surface layer) comprising the organopolysiloxane-based antifouling coating film and is a small burden to the environment.

Further, the present invention relates to an organopolysiloxane-based antifouling composite coating film which is a new-old composite coating film formed by coating an old antifouling coating film (former antifouling coating film) for repair painting or repainting, can be increased in film thickness and has excellent bond property between the old coating film and the new antifouling coating film formed on a surface of the old coating film and excellent antifouling property, and also relates to a ship and an underwater structure coated with the coating film.

### BACKGROUND ART

Bottoms of ships, underwater structures, fishing nets, etc. are exposed to water for a long period of time, so that various aquatic organisms, e.g., animals such as oysters, mussels and barnacles, plants such as laver, and bacteria, are liable to adhere to their surfaces and propagate thereon. On that account, appearances of the ship bottoms, underwater structures, etc. are deteriorated, and functions thereof are often impaired.

If such aquatic organisms adhere to a ship bottom or propagate thereon, surface roughness of the whole ship is increased to sometimes induce lowering of ship velocity and increase of fuel consumption. Further, if bacteria, slime (sludge substances) or larger organisms adhere to an underwater structure, the structure is corroded or an anticorrosion coating film is damaged, so that there is a fear that strength and functions of the underwater structure are lowered to thereby markedly shorten the lifetime. Therefore, it is necessary to remove such aquatic organisms from the bottom ship or the like. However, such removal work needs much labor and much time.

In order to prevent the above damages, ship bottoms and underwater structures are coated with various antifouling paints. Above all, coating films formed from antifouling paints containing polymerizable unsaturated carboxylic acid silyl ester constituent unit-containing copolymers are frequently used because they exhibit excellent antifouling performance for a long period of time.

Examples of antifouling paints proposed by the present applicant so far include a silyl ester copolymer-based antifouling paint of hydrolyzable type and a crosslinking metal salt copolymer-based antifouling paint of hydrolyzable type.

The silyl ester copolymer-based antifouling paint of hydrolyzable type substantially contains no antifouling agent and has such effects that when the antifouling paint is applied to a base surface and cured, a coating film having smaller surface free energy (surface tension) and being a smaller burden to the environment than a coating film composed of a conventional antifouling paint other than those mentioned above can be formed and this film can exhibit antifouling performance. In the antifouling coating film, however, there is yet room for improvement in bond property (adhesion) to a base, an undercoating film or the like.

By the way, if an antifouling paint is used over a long period of time, it is gradually wasted or damaged and its coating film becomes old and peels off, so that in order to maintain antifouling performance, repair painting or repainting of the coating film needs to be performed periodically.

If removal of the old coating film present on the base surface is carried out prior to the repair painting or the repainting, extra labor and cost are taken. From the viewpoints of economical advantage and working efficiency, therefore, it is desirable to apply a fresh paint directly onto the old coating film surface for repairing. In the case where a fresh paint is overlaid on the old coating film as above, bonding between the paint newly used and the old coating film becomes a problem. In recent years, moreover, further care to the environment and further reduction of a burden to the environment are cried for. Especially when the old coating film to be repaired is the polymerizable unsaturated carboxylic acid silyl ester-based antifouling coating film, this film sometimes becomes a spongy skeleton layer, and in this case, even if an attempt to newly apply an organopolysiloxane-based antifouling paint capable of reducing a burden to the environment directly onto such an old coating film is made, there resides a problem that the resulting coating film composed of the antifouling paint does not exhibit sufficient bond property because of small surface energy.

In order to solve such various problems as mentioned above, the present inventors have earnestly studied, and as a result, they have found that if a coating film composed of a moisture-curing composition comprising (b1) specific organopolysiloxane and/or (b2) a curing composition obtained by subjecting this organopolysiloxane and a specific extender pigment to specific treatment is formed as a tie coat prior to formation of an organopolysiloxane-based antifouling coating film as an outermost layer, the tie coat exhibits excellent bonding to a base or an undercoating film and also exhibits excellent bonding (adhesion) to the organopolysiloxane-based antifouling coating film as an outermost layer provided on the tie coat surface. Based on the finding, the present invention has been accomplished.

The present inventors have also found that in case of repair painting, a composite coating film, which is obtained by forming a specific sealer and a specific tie coat in this order on a surface of a base or a base with a coating film to be repaired and then laminating a specific organopolysiloxane-based finish coat as an outermost layer on the tie coat, exhibits very excellent adhesion not only to the old polymerizable unsaturated carboxylic acid silyl ester-based antifouling coating film (former antifouling coating film) but also to an old antifouling coating film composed of an antifouling paint containing a non-crosslinking or crosslinking copolymer having a (meth)acrylic acid metal salt unit and to an old antifouling coating film composed of an organopolysiloxane-based antifouling paint. Moreover, this composite coating film can be increased in film thickness and exhibits excellent antifouling property. Based on the finding, the present invention has been accomplished.

Some examples of composite coating films having a silicone rubber-based or resin-based antifouling coating film (layer) and processes for producing them, which have been proposed so far, are given below.

(1) In U.S. Patent No. 6,013,754 (patent document 1), there are disclosed a primer paint composition which is a paint composition applied to a base and accelerates bonding of a room temperature-curable silicone rubber-based fouling-release coating to a base and a process wherein in order to accelerate bonding of the room temperature-curable (RTV) silicone rubber-based fouling-release coating to the base, the base is subjected to primer treatment in the following manner before the base is exposed to the fouling environment.

That is to say, it is disclosed to carry out, before the base is exposed to the fouling environment, a primer treatment comprising:
a step of coating the base with a paint composition containing, as essential components:
   room temperature-curable polysiloxane selected from specific polyhydroorganopolysiloxane and specific polydiorganopolysiloxane,
   a compound capable of undergoing condensation reaction, which is selected from silanol, silane, organic acid, alcohol and hydroxyl-terminal siloxane capable of accelerating condensation reaction at room temperature in the absence of an organic metal catalyst, and
   an additive selected from the group consisting of aminosilane, chlorinated polyolefin, functional silane, pigment, mineral filler, thixotropic agent, stabilizer, surfactant, antioxidant, plasticizer and drying agent, and
   a step of curing the composition on the base.

In the above patent specification, it is also disclosed to carry out a primer treatment comprising:
a step of blending polydimethylsiloxane with oximinosilane in an inert atmosphere to form a one-pack blend (package),
a step of coating a base with the blend in air in the absence of a catalyst, and
a step of curing the blend.

However, even if an antifouling coating film composed of the room temperature-curable silicone rubber-based fouling-release coating is formed after a seawater contact surface of a hull or a marine structure is subjected to the primer treatment described in the above publication, there resides a problem of insufficient interlaminar bond strength between the coating film and the base.

(2) In a pamphlet of International Publication No. 98/39391 (patent document 2), there is disclosed a method for preventing fouling of a base in the fouling environment, wherein the following composition is applied to the base before the base is exposed to the fouling environment.

That is to say, there is disclosed a method for preventing fouling of a base in the fouling environment, comprising:
a step of applying and curing a composition comprising (A) a polymer having a curable functional group at a side chain and/or an end, recurring units of said polymer (A) being mainly recurring units other than siloxane units, (B) one or more kinds of polysiloxanes selected from curable organohydrogen polysiloxane and polydiorganosiloxane and having a curable functional group at a side chain and/or an end, said curable functional group of the component (B) being capable of undergoing curing reaction in the presence of the curable functional group of the component (A), and if necessary, a crosslinking agent, and
a step of forming a layer composed of (C) curable organohydrogen polysiloxane or polydiorganosiloxane, and if necessary, a crosslinking agent which cures the resulting layer.

However, even if an antifouling coating film composed of the composition described in the above publication is formed on a seawater contact surface of a hull or a marine structure in the above manner, there resides a problem of insufficient interlaminar bond strength between the coating film and the base.

(3) In National Publication of International Patent No. 506599/1995 (patent document 3), there is disclosed a composition preferable for forming a protective film, comprising (A) a polymer whose recurring units are mainly recurring units other than siloxane units and which contains a curing functional group at a side chain and/or an end and (B) curing organohydrogen polysiloxane or polydiorganosiloxane, said curing functional group of the component (A) being capable of undergoing curing reaction with the component (B). In this publication, it is also described that this composition is preferable for preventing fouling of oil field drilling equipment.

However, even if the protective film described in the above publication is formed on a seawater contact surface of a hull or a marine structure such as an oil field drilling equipment, there resides a problem of insufficient interlaminar bond strength between the film and the base.

(4) In U.S. Patent No. 5,192,603 (patent document 4), there is disclosed a method for protecting a firm base from fouling with aquatic organisms, comprising protecting the base by an elastomeric undercoating film (layer) and a room temperature-curing silicone rubber surface coating film (layer) (top coat).

However, even if the elastomeric undercoating layer is formed and then the room temperature-curing silicone rubber top coat is formed on a seawater contact surface of a ship or a marine structure, there resides a problem of insufficient interlaminar bond strength between the layer and the base.

(5) In National Publication of International Patent No. 507955/1993 (patent document 5), there is disclosed a paint composition comprising an organopolysiloxane composition and having resistance to fouling with aquatic organisms, which is obtained by blending (A) polydiorganosiloxane, (B) a crosslinking agent, etc. and is cured in water to form an elastomer, said polydiorganosiloxane (A) having a specific viscosity and being formed by recuring diorganosiloxane unit represented by a specific formula, to said compound (A) a hydrolyzable group and/or a hydroxyl group bonded to silicon being attached at the end, said crosslinking agent (B) having a hydrolyzable group bonded to silicon,
said paint composition being packed in two different packages which are blended prior to application to an underwater surface layer (e.g., surface of hull or surface of cooling water inlet or outlet of power plant),
wherein:
a first package comprises the polyorganosiloxane (A) and the crosslinking agent (B), and
a second package comprises α,ω-dihydroxypolydiorganosiloxane having a specific viscosity and formed by recuring diorganosiloxane unit represented by a specific formula, contains no crosslinking agent, and contains no catalyst for crosslinkage between a hydrolyzable group bonded to silicon and a hydroxyl group.

However, even if a coating film composed of the composition described in the above publication is formed on a seawater contact surface of a hull or a marine structure, there resides a problem of insufficient interlaminar bond strength between the film and the base.

(6) In National Publication of International Patent No. 505845/1993 (patent document 6), there is disclosed a primer composition which is applied to a base in order to accelerate bonding of a room temperature-vulcanizing silicone rubber coating and comprises (A) an aminosilane material, (B) chlorinated polyolefin and (C) room temperature-curing polydiorganosiloxane, wherein the aminosilane material (A) is (i) primary amine functional silane (formula [I]: (RO)ₓR(₃₋ₓ)SiR¹NHR²), (ii) a reaction product of the primary amine functional silane (i) with epoxy functional silane (formula [II]: A-Si(B)ₐ(OB)(₃₋ₐ), or (iii) a reaction product of the primary amine functional silane (i) with α,ω-dihydroxypolydimethylsiloxane (formula [III]: HO(Si(CH₃)₂O)_{y}H) (definitions of symbols: omitted).

In the above publication, an embodiment wherein the room temperature-curing polydiorganosiloxane (C) is used in combination with ketoiminooxysilane is also described.

However, even if a coating film composed of the coating composition is formed on a seawater contact surface of a hull or a marine structure using the method for inhibiting underwater surface fouling described in the above publication after pretreatment with a tie coat if necessary, there resides a problem of insufficient interlaminar bond strength between the film and the base.

(7) In Japanese Patent Laid-Open Publication No. 249707/1989 (patent document 7), there is disclosed a method for inhibiting underwater surface fouling, wherein to the underwater surface is applied a coating composition comprising (A) curing polyorganosiloxane, (B) a curing agent capable of curing the component (A) to form a silicone elastomer, (C) polyisocyanate and (b4) a compound (D.1) capable of forming polyurethane, polyurea or poly(urethane-urea) by the reaction with the component (C) and having active hydrogen groups of more than 1 or a compound (D.2) capable of being hydrolyzed to form the compound (D.1). In this publication, it is also described that this method exhibits improved resistance to fouling.

In the above publication, further, there is described a tie coat which can be used for pretreatment prior to application of the above coating composition, has excellent adhesion to a silicone rubber and contains as a main material a silicone resin containing an adhesion accelerator such as aminosilane (trademark "Intersleek Tie-coat"). It is also described that the tie coat can be colored with a white pigment or a coloring pigment. Further, it is also described that the coating composition can contain a reinforcing pigment such as silica, particularly hydrophobic thermally decomposable silica.

However, even if a coating film composed of the coating composition is formed on a seawater contact surface of a hull or a marine structure using the method for inhibiting underwater surface fouling described in the above publication after pretreatment with a tie coat if necessary, there resides a problem of insufficient interlaminar bond strength between the film and the base.

(8) In Japanese Patent Laid-Open Publication No. 222908/1989 (patent document 8), there is disclosed a method for building a hull or a part thereof, comprising a step of feeding a curing resin to a mold and a step of curing the resin in the mold, wherein an antifouling material having no biocidal property is fed to a mold in such a manner that the antifouling material having no biocidal property forms an outermost layer of the hull.

In the above publication, as the antifouling material, organopolysiloxane such as a room temperature-vulcanizing silicone rubber having a hydroxyl end group or curing organopolysiloxane having an acyloxy group and an alkoxy end group is mentioned, and it is described that such an antifouling material may contain unreactive fluid polyorganosiloxane or the like. It is also described that as the silicone rubber a transparent silicone rubber composition containing no filler is preferable in the antifouling property to a commercially available one containing a silica filler.

Further, as a resin layer directly adjacent to the room temperature-vulcanizing silicone rubber layer, a tie coat comprising a silicone resin and an aminosilane adhesion accelerator is mentioned.

However, even if a coating film composed of the antifouling material is formed on a seawater contact surface of a hull or a marine structure using the method for building a hull or the like described in the above publication, there resides a problem of insufficient interlaminar bond strength between the film and the base.

(9) In Japanese Patent No. 2533887 (patent document 9, corresponding to Japanese Patent Laid-Open Publication No. 69870/1988), there is disclosed a coating composition comprising (A) an anhydride polymer containing, as functional groups, cyclic carboxylic acid anhydride groups of more than 2 based on 1 molecule and (B) a polymer reactive to the anhydride group of the polymer (A) and containing at least 2 functional groups based on 1 molecule, wherein the polymer (B) contains (i) a flexible polymer chain such as silicone and has a hydroxyalkylamino group or a hydroxyl substituted acyloxyalkylamino group as an end group of the polymer chain (i). In this publication, it is also described that when the coating composition is applied to a base and cured at a temperature in the vicinity of room temperature, a tough tack-free film can be formed.

However, even if a film (layer) composed of the coating composition described in the above publication is formed on a seawater contact surface of a hull or a marine structure, there resides a problem of insufficient interlaminar bond strength between the film and the base.

(10) In National Publication of International Patent No. 500623/1980 (patent document 10), there is disclosed a method for preventing fouling of a marine structure, wherein a flexible sheet material, which has been coated with a silicone rubber layer as an outermost layer, is fixed to an underwater surface of the marine structure by the use of a nitrile rubber, an epoxy adhesive or the like. Further, an embodiment wherein a layer of a material other than a silicone rubber, such as a natural rubber, is formed as an inner layer below the silicone rubber layer or an embodiment wherein a methylphenyl silicone oil or the like is added to the silicone rubber layer is also described.

However, even if the sheet material described in the above publication is provided on a seawater contact surface of a hull or a marine structure or even if an inner layer is further provided below the sheet material, there resides a problem of insufficient interlaminar bond strength between the sheet material layer and the adhesive layer.

(11) In Japanese Patent Publication No. 26272/1981 (patent document 11), there is disclosed a method for preventing or reducing accumulation of marine organisms on a seawater contact surface during the exposure of the seawater contact surface to seawater, wherein the seawater contact surface is coated with a film of a silicone rubber/silicone oil blend which is obtained by low-temperature curing an oligomeric silicone rubber having hydroxyl groups at both ends in the presence of a silicone oil having a specific molecular weight and a specific viscosity. It is also described that the above film may be provided on a coating layer composed of an adhesion-preventing composition containing a toxic compound such as a toxic organometallic compound. Further, an embodiment wherein Aerosil or the like is added to the film-forming blend is also described.

However, even if the film described in the above publication is provided on a seawater contact surface of a hull or even if a layer composed of the adhesion-preventing composition is further provided below the film, there resides a problem of insufficient interlaminar bond strength between the film and the base.

As described above, even if an antifouling coating film composed of a silicone rubber-based fouling-release coating (paint) or the like is formed after the primer treatment described in (1) to (11) is carried out if desired, there resides a problem of insufficient interlaminar bond strength between the film and the base.
Patent document 1: U.S. Patent No. 6,013,754
Patent document 2: pamphlet of International Publication No. 98/39391
Patent document 3: National Publication of International Patent No. 506599/1995
Patent document 4: U.S. Patent No. 5,192,603
Patent document 5: National Publication of International Patent No. 507955/1993
Patent document 6: National Publication of International Patent No. 505845/1993
Patent document 7: Japanese Patent Laid-Open Publication No. 249707/1989
Patent document 8: Japanese Patent Laid-Open Publication No. 222908/1989
Patent document 9: Japanese Patent No. 2533887 (corresponding to Japanese Patent Laid-Open Publication No. 69870/1988)
Patent document 10: National Publication of International Patent No. 500623/1980
Patent document 11: Japanese Patent Publication No. 26272/1981

### DISCLOSURE OF THE INVENTION

### PROBLEMS TO BE SOLVED BY THE INVENTION

The present invention is intended to solve such problems associated with the prior art as described above, and it is an object of the invention to provide a tie coat with which a base or an undercoating layer and an organopolysiloxane-based antifouling coating film that becomes an outermost layer can be firmly bonded.

It is another object of the invention to provide a tie coat having, in addition to the above feature, (i) excellent anti-sagging property and preferred film thickness-increasing property (excellent film thickness) and (ii) excellent coating workability and excellent film thickness uniformity.

It is a further object of the invention to provide an organopolysiloxane-based antifouling composite coating film which comprises an organopolysiloxane-based finish coat having excellent fouling-release property and a tie coat (primer coat) formed below the finish coat, has excellent interlaminar bond strength, contains no antifouling agent in any film (layer) and is a small burden to the environment.

It is a still further object of the invention to provide an organopolysiloxane-based antifouling composite coating film which is a new-old composite coating film formed by coating an old antifouling coating film (former antifouling coating film) for repair painting or repainting, can be increased in film thickness and exhibits excellent bond property between the old coating film and the new antifouling coating film formed thereon and excellent antifouling property, and to provide a ship and an underwater structure coated with the coating film.

### MEANS TO SOLVE THE PROBLEMS

The tie coat for an organopolysiloxane-based antifouling coating film according to the present invention is a tie coat which is formed on a surface of a base or an undercoating film prior to formation of an organopolysiloxane-based antifouling coating film and is formed from a moisture-curing organopolysiloxane-based composition comprising:
(b1) organopolysiloxane having condensing functional groups at both ends of a molecule, and/or
(b2) a curing composition formed by subjecting (b1) organopolysiloxane having condensing functional groups at both ends of a molecule and an extender pigment selected from the group consisting of silica, calcium carbonate, talc, mica, clay, kaolin and barium sulfate to contact treatment with heating or without heating.

The silica is preferably hydrophobic silica and/or hydrophilic silica.

A first organopolysiloxane-based antifouling composite coating film (first composite coating film) according to the present invention is an organopolysiloxane-based antifouling composite coating film formed by closely laminating a tie coat (B) and a finish coat (C) on a base in this order from the base side toward the surface (base/tie coat (B)/finish coat (C)), wherein the tie coat (B) is a coating film (layer) formed from a moisture-curing organopolysiloxane-based composition comprising:
(b1) organopolysiloxane having condensing functional groups at both ends of a molecule, and/or
(b2) a curing composition formed by subjecting (b1) organopolysiloxane having condensing functional groups at both ends of a molecule and an extender pigment selected from the group consisting of silica, calcium carbonate, talc, mica, clay, kaolin and barium sulfate to contact treatment with heating or without heating, and
the finish coat (C) is a coating film (layer) formed from a three-pack type organopolysiloxane-based curing composition comprising:
(c1) a main agent comprising organopolysiloxane having condensing functional groups at both ends of a molecule,
(c2) a curing agent component comprising tetraalkoxysilicate or its condensate, and
(c3) a curing accelerator component comprising a metallic compound.

A second organopolysiloxane-based antifouling composite coating film (second composite coating film) according to the present invention is an organopolysiloxane-based antifouling composite coating film formed by closely laminating (A) an epoxy-based anticorrosion coating film, (B) a tie coat and (C) an organopolysiloxane-based finish coat on a base in this order from the base side toward the surface (base/(A)/(B)/(C)), wherein the tie coat (B) is a coating film (layer) formed from a moisture-curing organopolysiloxane-based composition comprising:
(b1) organopolysiloxane having condensing functional groups at both ends of a molecule, and/or
(b2) a curing composition formed by subjecting (b1) organopolysiloxane having condensing functional groups at both ends of a molecule and an extender pigment selected from the group consisting of silica, calcium carbonate, talc, mica, clay, kaolin and barium sulfate to contact treatment with heating or without heating, and
the finish coat (C) is a coating film (layer) formed from a three-pack type organopolysiloxane-based curing composition comprising:
(c1) a main agent comprising organopolysiloxane having condensing functional groups at both ends of a molecule,
(c2) a curing agent component comprising tetraalkoxysilicate or its condensate, and
(c3) a curing accelerator component comprising a metallic compound.

A third organopolysiloxane-based antifouling composite coating film according to the present invention is an organopolysiloxane-based antifouling composite coating film formed by closely laminating (G) an old antifouling coating film that is a former antifouling coating film to be repair-painted or repainted, (A) an epoxy-based sealer coat, (B) a tie coat and (C) an organopolysiloxane-based finish coat on a base in this order from the base side toward the surface (base/(G)/(A)/(B)/(C)), wherein the tie coat (B) is a coating film formed from a moisture-curing organopolysiloxane-based composition comprising:
(b1) organopolysiloxane having condensing functional groups at both ends of a molecule, and/or
(b2) a curing composition formed by subjecting organopolysiloxane having condensing functional groups at both ends of a molecule and an extender pigment selected from the group consisting of silica, calcium carbonate, talc, mica, clay, kaolin and barium sulfate to contact treatment with heating or without heating, and
the finish coat (C) is a coating film formed from a three-pack type organopolysiloxane-based curing composition comprising:
(c1) a main agent comprising organopolysiloxane having condensing functional groups at both ends of a molecule,
(c2) a curing agent component comprising tetraalkoxysilicate or its condensate, and
(c3) a curing accelerator component comprising a metallic compound.

In the present invention, the old antifouling coating film (G) that is a former antifouling coating film to be repair-painted or repainted is preferably at least one antifouling coating film selected from the group consisting of the following antifouling coating films (g1), (g2), (g3) and (g4):
(g1) an antifouling coating film formed from an antifouling paint containing an unsaturated carboxylic acid silyl ester copolymer,
(g2) an antifouling coating film formed from an antifouling paint containing a non-crosslinking or crosslinking copolymer having a (meth)acrylic acid metal salt unit,
(g3) an organotin polymer-based (e.g., tributyltin polymer-based) antifouling coating film, and
(g4) an antifouling coating film formed from an antifouling paint containing one or more water-soluble resins selected from rosin and its derivatives.

In the present invention, the old antifouling coating film (G) is also preferably (g4) an antifouling coating film formed from an antifouling paint containing (i) one or more water-soluble resins selected from rosin and its derivatives and (ii) one or more water-slightly soluble resins selected from a vinyl chloride resin, a modified vinyl resin, an epoxy resin, an acrylic resin, a non-crosslinking or crosslinking copolymer having a (meth)acrylic acid metal salt unit, and an unsaturated carboxylic acid silyl ester copolymer.

In the present invention, the antifouling coating film (g1) formed from an antifouling paint containing an unsaturated carboxylic acid silyl ester copolymer is preferably an antifouling coating film formed from an antifouling paint containing a silyl ester copolymer having a constituent unit derived from silyl (meth)acrylate represented by the following formula:

CH₂=C(R¹)-COO-SiR²R³R⁴

wherein R¹ is hydrogen or a methyl group, and R², R³ and R⁴ are each an alkyl group.

In the present invention, the antifouling coating film (g2) formed from an antifouling paint containing a non-crosslinking or crosslinking copolymer having a (meth)acrylic acid metal salt unit is preferably an antifouling coating film formed from an antifouling paint containing a copolymer having a constituent unit derived from organic monobasic acid metal (meth)acrylate represented by the following formula:

CH₂=C(R¹)-COO-M-O-CO-R²

wherein M is a divalent metal, R¹ is hydrogen or a methyl group, and R² is an organic monobasic acid residue.

In the present invention, the antifouling coating film (g2) formed from an antifouling paint containing a crosslinking copolymer having a (meth)acrylic acid metal salt unit is preferably an antifouling coating film formed from an antifouling paint containing a crosslinking copolymer having a constituent unit derived from metal di(meth)acrylate represented by the following formula:

CH₂=C(R¹)-COO-M-O-CO-C(R¹)=CH₂

wherein M is a divalent metal, and two R¹ are each independently hydrogen or a methyl group.

In the present invention, the organopolysiloxane-based antifouling coating film (g3) is preferably an antifouling coating film formed by condensing organopolysiloxane having condensing functional groups at both ends of a molecule.

In the present invention, the epoxy-based sealer coat (A) preferably contains a silane coupling agent.

In any of the tie coat and the first to the third composite coating films of the invention, the moisture-curing organopolysiloxane-based composition for forming the tie coat preferably further comprises a silane coupling agent (b3), and the silane coupling agent (b3) is desirably an aminosilane compound.

In any of the tie coat and the composite coating films of the invention, the moisture-curing organopolysiloxane-based composition for forming the tie coat preferably further comprises a coloring pigment (b4).

In the present invention, the moisture-curing organopolysiloxane-based composition preferably further comprises a metallic compound (b5) as a curing catalyst, and the metallic compound (b5) is desirably a tin compound or a titanium compound.

In any of the tie coat and the composite coating films of the invention, the organopolysiloxane (b1) having condensing functional groups at both ends of a molecule is preferably organopolysiloxane having condensing functional groups of deoxime type, that is, organopolysiloxane having "condensing functional groups" of such a type as is cured by occurrence of deoximation reaction (deoxime curing type) as condensing functional groups.

In any of the tie coat and the composite coating films of the invention, the extender pigment, preferably silica or calcium carbonate, particularly preferably silica, and the organopolysiloxane (b1) having condensing functional groups at both ends of a molecule have been preferably subjected to heat treatment, and in this case, they have been desirably subjected to heat treatment at a temperature of not lower than 100°C.

In any of the tie coat and the composite coating films of the invention, the curing composition (b2) or the moisture-curing organopolysiloxane-based composition may contain one of a curing composition (j) formed by subjecting orgnaopolysiloxane having condensing functional groups at both ends of a molecule and the extender pigment to contact treatment with heating and a curing composition (k) formed by subjecting them to contact treatment without heating, but preferably contains both of them, because the resulting composition exhibits excellent interlaminar bond strength and have excellent anti-sagging property and leveling property with a good balance.

In any of the tie coat and the composite coating films of the invention, the component (b2) as the polymer is contained in an amount of 1 to 100 parts by weight based on 100 parts by weight of the component (b1).

In any of the tie coat and the composite coating films of the invention, one or more of the extender pigments are desirably contained in addition to the component (b2) that is a contact treatment product, and of the extender pigments, silica and calcium carbonate are desirable.

In any of the tie coat and the composite coating films of the invention, the silica preferably comprises hydrophobic silica (i) and hydrophilic silica (ii), and the hydrophobic silica (i) and the hydrophilic silica (ii) are preferably contained in a weight ratio ((i)/(ii)) of 1/99 to 99/1.

In any of the tie coat and the composite coating films of the invention, the silica preferably comprises hydrophobic silica (i) only.

In the first to the third composite coating films of the invention, the metallic compound (c3) in the three-pack type organopolysiloxane-based curing composition for forming the finish coat (C) is preferably an organotin compound.

In the first to the third composite coating films of the invention, at least one component of the component (c1), the component (c2) and the component (c3) in the three-pack type organopolysiloxane-based curing composition for forming the finish coat (C) preferably further comprises (c4) organopolysiloxane having no condensing functional group.

The ship or the underwater structure according to the present invention is formed by the use of the above-mentioned tie coat or coated with any one of the above-mentioned organopolysiloxane-based antifouling composite coating films.

### EFFECT OF THE INVENTION

According to the present invention, a specific tie coat (bonding film, primer coat) is formed on a surface of a base or an undercoating film prior to formation of an organopolysiloxane-based antifouling coating film which substantially contains no antifouling agent and is a small burden to the environment, on the surface of the base or the like. Therefore, the base or the undercoating layer such as a primary rust-preventive coating film which is present below the lower surface of the tie coat and the organopolysiloxane-based antifouling coating film which contains no antifouling agent, is a small burden to the environment and becomes an outermost layer (finish coat) can be firmly bonded. Moreover, because the tie coat itself has a certain thickness and is formed from an organopolysiloxane-based paint that is a small burden to the environment, a composite coating film having a large thickness and antifouling property can be readily formed by providing a finish coat on the tie coat surface.

In the present invention, especially when the component (b2) is a curing composition obtained by subjecting the organopolysiloxane (b1) having condensing functional group at both ends of a molecule and the extender pigment such as silica to contact treatment with heating (e.g., not lower than 100°C and lower than decomposition temperatures of the compounding components), the tie coat exhibits excellent bond property and tends to have (i) excellent anti-sagging property and preferred film thickness-increasing property (excellent film thickness). When the component (b2) is a curing composition obtained by subjecting the organopolysiloxane (b1) and the extender pigment such as silica to contact treatment without heating (at about room temperature), the tie coat exhibits excellent bond property and tends to have (ii) excellent coating workability and excellent film thickness uniformity.

According to the present invention, further, because the tie coat and an organopolysiloxane-based antifouling coating film (finish coat) are laminated in this order on a surface of a base or an undercoating film to form a composite coating film, the base or the undercoating film (layer) and the finish coat can be firmly bonded with the tie coat, and the antifouling coating film (layer) on the surface exhibits excellent fouling-release property. Moreover, because any film (layer) does not substantially contain an antifouling agent, the organopolysiloxane-based antifouling composite coating film is a small burden to the environment.

The third organopolysiloxane-based antifouling composite coating film (also referred to as a "third composite coating film") is a new-old composite coating film formed by coating an old antifouling coating film (former antifouling coating film) for repair painting or repainting, and this composite coating film can be increased in film thickness by selecting a new antifouling coating film, exhibits excellent bond strength between the old coating film and the new antifouling coating film and has excellent antifouling property.

### BEST MODE FOR CARRYING OUT THE INVENTION

The tie coat for an organopolysiloxane-based antifouling coating film, the organopolysiloxane-based antifouling composite coating film (also referred to as a "laminated coating film"), and a ship and an underwater structure coated with the coating film are described in detail hereinafter.

The terms "tie coat", "finish coat", "sealer coat", "primer coat" and the like used in the following description mean not only cured coating films (namely, coating films), cured layers of a composite (laminated) coating film or treated layers but also uncured paints (paint compositions) for forming such cured coating films.

### Base and undercoating film

First, a base or an undercoating film (layer) that is a material to be provided with the tie coat (B) of the invention is described.

The tie coat (B) is provided on a surface of a base or an undercoating film (layer), and examples of the bases include outer surfaces of ships, such as passenger boats, cargo boats and tankers, which are made from materials of steel plates, aluminum plates, etc.; and steel structures other than ships, such as water supply/drainage channels of atomic power plants, towers, bridges, oil field drilling plants, other various plants and marine structures of submarine observatories. The materials of the ships, the marine structures, etc. may be concrete, FRP and wood in addition to the above steel materials.

Examples of the undercoating films include films composed of undercoating paints, such as epoxy-based zinc-rich primers and epoxy-based rust-preventive primers, which are applied onto a surface of the base prior to formation of the tie coat.

In more detail, for forming the undercoating film, coating materials referred to as "zinc-based shop primers" (also referred to as "zinc-based primary rust-preventive paints" or "zinc-based primary anticorrosion paints) or "epoxy resin-based anticorrosion paints" described in the paragraphs [0018] to [0025] of Japanese Patent Laid-Open Publication No. 46957/2001 previously proposed by the present applicant are preferably employed because they have excellent rust prevention property, weldability, bonding property to a base, bonding property to a tie coat formed on the undercoating film surface and the like with a good balance.

The zinc-based shop primer (zinc-based primary rust-preventive paint) may be any of organic type and inorganic type, and the organic zinc-based primary rust-preventive paint is, for example, an epoxy-based zinc primer. As the inorganic zinc-based primary rust-preventive paint, an inorganic zinc primary rust-preventive paint using an inorganic binder such as a silicate-based binder, particularly using a silicate-based binder, is preferably employed.

Especially when the organic zinc-based primary rust-preventive paint is used, a coating film having uniform thickness and excellent anticorrosion property is obtained, and besides, the quantity of a paint to be applied onto the surface of this primary rust-preventive coating film can be saved. When the inorganic zinc-based primary rust-preventive paint is used, a coating film having excellent weldability, uniform thickness and excellent anticorrosion property is obtained. Of such zinc-based shop primers, the inorganic zinc-based primary rust-preventive paint is particularly preferable.

The epoxy-based zinc primer preferably has a nonvolatile content by volume of 25 to 35% and a zinc concentration by weight (in a coating film) of 50 to 90%. The inorganic zinc-based primary rust-preventive paint is preferably one comprising a silicate-based binder and a zinc powder that is a rust-preventive pigment and having a nonvolatile content by volume of 17 to 27% and a zinc concentration by weight (in a coating film) of 20 to 95%.

If a rust-preventive paint other then the zinc-based shop primers is used as a shop primer in the invention, turning is liable to occur, but when a primer film (layer) composed of the zinc-based shop primer, particularly, the inorganic zinc-based primary rust-preventive paint containing a silicate-based binder, is formed on a surface of a steel material, turning rarely occurs by virtue of anticorrosion effect of zinc even if the primer film (layer) is damaged.

The coating (painting) method with the zinc-based shop primer is not specifically restricted, and a hitherto known coating method is adoptable. Coating with the zinc-based shop primer is generally carried out after the steel material surface is subjected to shot blasting to remove scales.

The thickness of the undercoating film (layer) obtained by coating with the primer is not specifically restricted.

The undercoating film such as an epoxy-based sealer coat may contain the later-described silane coupling agent.

In the epoxy resin-based anticorrosion paint, an epoxy-based anticorrosion resin as a resin component and an amine-based curing agent (e2) for epoxy resin are generally contained, and in addition, an extender pigment (e3), an anti-sagging agent (e4), etc. may be contained when needed.

Examples of the epoxy-based anticorrosion resins employable in the invention include bisphenol type epoxy resins, glycidyl ester epoxy resins, glycidyl amine epoxy resins, phenolic novolak epoxy resins, cresol epoxy resins, dimeric acid modified epoxy resins, aliphatic epoxy resins, alicyclic epoxy resins and epoxidized oil epoxy resins. Of these, bisphenol type epoxy resins such as those of bisphenol A type and F type are preferable because the resulting anticorrosion coating film has excellent adhesion to a base and excellent anticorrosion property. The above epoxy resins can be used singly or in combination of two or more kinds.

In the anticorrosion paint composition containing a solvent and the like, the epoxy resin is desirably contained in an amount of usually 10 to 60% by weight, preferably 20 to 50% by weight, and based on 100% by weight of the solids content in the anticorrosion paint composition [i], the epoxy resin is desirably contained in an amount of usually 10 to 70% by weight, preferably 10 to 60% by weight, because the resulting film exhibits excellent anticorrosion property.

As the epoxy resin (e1), a commercially available one is employable, and examples of the bisphenol type epoxy resins include "Epicoat 828", "Epicoat 834", "Epicoat 1001", "Epicoat 1004", "Epicoat 807", "Epicoat 4004P" and "Epicoat 4007P" (available from Japan Epoxy Resins Co., Ltd.).

### Amine-based curing agent (e2) for epoxy resin

Examples of the amine-based curing agents (e2) for epoxy resin contained in the anticorrosion paint composition [i] include Mannich modified amines formed by Mannich condensation reaction of phenols with formalin and amine compounds, and aliphatic polyamines. From the viewpoints that handling of the paint becomes easy and the pot life of the paint is in a preferred range, it is preferable to use polyamidoamine formed by condensation of mainly a dimeric acid with polyamine and having a first and a second reactive amino groups in a molecule.

The amine-based curing agent (e2) for epoxy resin has only to be used theoretically in such an amount (equivalent amount) that the number of epoxy groups in the epoxy resin (e1) becomes equal to the number of amino groups in the amine-based curing agent (e2), but in the present invention, the amine-based curing agent has only to be used in such an amount that the amount of the amino group becomes 0.35 to 0.9 equivalent, preferably 0.4 to 0.8 equivalent, based on 1 equivalent of the epoxy group. Further, based on 100 parts by weight of the epoxy resin (e1), the amine-based curing agent (e2) can be used in an amount of, for example, 10 to 300 parts by weight, preferably 20 to 200 parts by weight.

As the amine-based curing agent (e2) for epoxy resin, a commercially available one is employable, and examples thereof include "Lackamide TD966" (available from Dainippon Ink & Chemicals Inc.) and "Sanmide 307D-60" (available from Sanwa Chemical Industry Co., Ltd.).

### Extender pigment (e3)

As the extender pigment (e3) which can be contained in the anticorrosion paint composition [i], a hitherto known one is employable, and examples thereof include talc, silica, mica, clay, calcium carbonate, kaolin, alumina white, white carbon, aluminum hydroxide, magnesium carbonate, barium carbonate, barium sulfate, titanium oxide and carbon black. Of these, talc, barium sulfate, mica, titanium oxide or carbon black is preferably used in the invention. These extender pigments may be used singly or in combination of two or more kinds. The extender pigment (e3) can be contained in an amount of, for example, 20 to 100% by weight based on 100% by weight of the solids content in the anticorrosion paint composition [i].

### Anti-sagging agent (e4)

As the anti-sagging agent (e4) which can be contained in the anticorrosion paint composition [i], a hitherto known one is employable, and examples thereof include organic clay-based agent, salts, such as amine salts, stearate salts, lecithin salts and alkylsulfonic acid salts of Al, Ca and Zn, polyethylene wax, amide wax, hydrogenated castor oil wax-based agent, polyamide wax-based agent, mixtures thereof, synthetic silica fine powder and polyethylene oxide wax. Of these, polyamide wax is preferably used in the invention. The anti-sagging agent (e4) is contained in an amount of, for example, 0 to 5% by weight based on 100% by weight of the anticorrosion paint composition [i].

In the preparation of the epoxy resin-based paint composition [i], the above-mentioned various components such as commercially available products have only to be blended in the above amounts in a conventional manner. In addition to the above components, various components used for epoxy resin-based anticorrosion coating films, such as solvent, liquid hydrocarbon resin, surface active agent and rust-preventive pigment, may be added in proper amounts, when needed. The epoxy resin-based paint composition is sometimes provided as a composition of two-pack type consisting of a main agent component containing the epoxy resin (e1) and a curing agent component containing the amine-based curing agent (e2).

### Tie coat (B) for organopolysiloxane-based antifouling coating film

The tie coat (B) for an organopolysiloxane-based antifouling coating film according to the invention is a tie coat (also referred to as a "binding film" or a "primer coat") formed on a surface of a base or an undercoating film (layer) (both of them being together referred to as a "base or the like") prior to formation of an organopolysiloxane-based antifouling coating film (layer) on the surface of the base or the like, and is formed by applying and curing the following specific moisture-curing organopolysiloxane-based composition.

The moisture-curing organopolysiloxane-based composition comprises "(b1) organopolysiloxane having condensing functional groups at both ends of a molecule" and/or "(b2) a curing composition formed by subjecting (b1) organopolysiloxane having condensing functional groups at both ends of a molecule and a specific extender pigment (inorganic filler) to contact treatment (e.g., mixing) with heating or without heating".

In the present invention, in any of the tie coat and tie coats in the later-described composite coating films, one or more extender pigments (which have not been subjected to contact treatment) may be contained in addition to the contact treatment product component (b2).

As the extender pigment, a substance selected from the group consisting of silica, calcium carbonate, talc, mica, clay, kaolin and barium sulfate is used, preferably silica or calcium carbonate is used, and particularly preferably silica is used.

As the moisture-curing organopolysiloxane-based composition, a curing composition, a composition for coating, a paint or the like, which has been previously proposed by the present applicant in Japanese Patent Laid-Open Publication No. 181509/2001 (Japanese Patent Application No. 236694/2000) or Japanese Patent Laid-Open Publication No. 139816/2001 (Japanese Patent Application No. 327507/1999), can be preferably used.

The tie coat of the invention obtained by applying the moisture-curing organopolysiloxane-based composition on a surface of a base or the like and curing the composition can be firmly bonded to the base or the like present below the lower surface of the tie coat and to the later-described organopolysiloxane-based antifouling coating film that becomes an outermost layer (finish coat). As a result, excellent antifouling performance of the organopolysiloxane-based antifouling coating film (layer) that is laminated on the tie coat surface and is a small burden to the environment can be continuously exhibited for a long period of time.

Although the thickness of the tie coat (cured product) is not specifically restricted, it is in the range of usually 50 to 500 µm, preferably about 50 to 300 µm.

Composition of the tie coat, a moisture-curing organopolysiloxane-based composition used for forming the tie coat, a coating method, etc. are described below in detail.

### Moisture-curing organopolysiloxane-based composition

In the present invention, the tie coat (B) and a tie coat (B) layer of the later-described composite coating film are each preferably a tie coat composed of a specific moisture-curing organopolysiloxane-based composition, because such a tie coat exhibits excellent bond strength to a base or an epoxy-based primary rust-preventive coating film as an undercoating layer and excellent bond strength to a finish coat (C) formed on the upper surface of the tie coat (B) with a good balance.

As previously described, the moisture-curing organopolysiloxane-based composition comprises any one or both of the following component (b1) and the following component (b2) that is a curing composition.

That is to say, the moisture-curing organopolysiloxane-based composition comprises:
(b1) organopolysiloxane having condensing functional groups at both ends of a molecule, and/or
(b2) a curing composition formed by subjecting (b1) organopolysiloxane having condensing functional groups at both ends of a molecule and an extender pigment selected from the group consisting of silica, calcium carbonate, talc, mica, clay, kaolin and barium sulfate (preferably silica or calcium carbonate, particularly preferably silica) to contact treatment (typically mixing) with heating or without heating.

In the present invention, an embodiment wherein one or more extender pigments similar to the extender pigment in the component (b2) are used instead of a part or the whole of the component (b1) is included.

As the silica, hydrophobic silica and/or hydrophilic silica is preferable.

The curing composition (b2) may be a curing composition (b2-1) obtained by subjecting the specific organopolysiloxane (b1) and the extender pigment to contact treatment without heating, or may be a curing composition (b2-2) obtained by subjecting the specific organopolysiloxane (b1) and the extender pigment to contact treatment with heating at room temperature or the like, or may be a combination of the curing composition (b2-1) obtained without heating and the curing composition (b2-2) obtained with heating.

The contact treatment is desirably carried out by mixing the extender pigment such as silica with organopolysiloxane having condensing functional groups at both ends of a molecule (e.g., reaction product of dimethylpolysiloxane with vinyltris(methylethylketoximino)silane) with heating at a temperature of not lower than about 100°C and lower than the decomposition temperatures of the compounding components or without heating (temperature of about 15 to 25°C that is room temperature). It is desirable that the organopolysiloxane (b1) having condensing functional groups at both ends of a molecule (e.g., the formula (i) in the working examples) and the extender pigment such as silica are subjected to close contact treatment under the above conditions, because a paint having excellent anti-sagging property is obtained and a coating film of a large thickness (excellent film thickness) is obtained.

In the contact treatment, the extender pigment such as silica may be mixed with materials for preparing the organopolysiloxane (polymer) having condensing functional groups at both ends of a molecule (e.g., dimethylpolysiloxane and vinyltris(methylethylketoximino)silane) to perform reaction of the dimethylpolysiloxane with the vinyltris(methylethylketoximino)silane, whereby close contact of silica with the resulting polymer can be carried out.

In the materials for forming the organopolysiloxane (b1), macromonomers (e.g., dimethylpolysiloxane) having high molecular weights are included as long as they can form the organopolysiloxane (b1) having condensing functional groups at both ends of a molecule.

### Organopolysiloxane (b1)

The organopolysiloxane (b1) is the same as organopolysiloxane (A) described in the aforesaid Japanese Patent Laid-Open Publication No. 181509/2001, and in this compound, both end groups of a molecule (chain molecule or molecular main chain) are condensation-reactive groups (condensing functional groups).

As the organopolysiloxane (b1), such a condensation-reactive polymer that becomes a main component of organosilicone as described in Japanese Patent No. 2522854 is used, and a liquid polymer is particularly preferably used.

The organopolysiloxane (b1) is desirably organopolysiloxane represented by the following formula [α]: 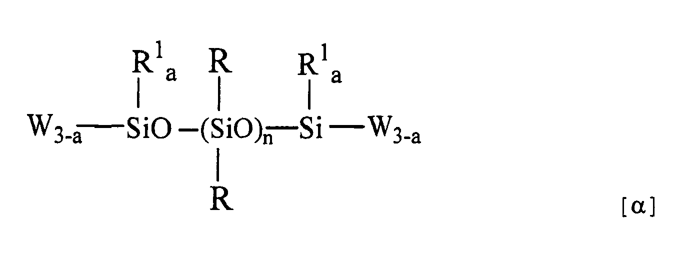 wherein W is a hydroxyl group (-OH) or a hydrolyzable group as a condensing functional group, R¹ and R are each independently an unsubstituted or substituted monovalent hydrocarbon group of 1 to 12 carbon atoms, plural R¹ or plural R may be the same or different, n is an integer of 5 or more, and a is 0, 1 or 2.

When a in the formula [α] is 0 or 1, W is desirably a hydrolyzable group, and when a is 2, W is desirably a hydroxyl group (-OH). In the present invention, when W in the formula [α] is a hydroxyl group and a is 2, the later-described silane coupling agent (b3) and the like can be used in addition to the component (b1) and the component (b2).

When W in the formula [α] is a hydrolyzable group, the hydrolyzable group is, for example, an alkoxy group, an acyloxy group, an alkenyloxy group, an iminooxy group, an amino group, an amide group or an aminooxy group, and is preferably an iminooxy group (ketoxime group) or an alkoxy group.

The alkoxy group is preferably an alkoxy group having 1 to 10 carbon atoms in all, and between the carbon atoms, an oxygen atom may be present at one or more places. Examples of the alkoxy groups include methoxy, ethoxy, propoxy, butoxy, methoxyethoxy and ethoxyethoxy. The acyloxy group is desirably an aliphatic or aromatic acyloxy group represented by the formula RCOO- (wherein R is an alkyl group of 1 to 10 carbon atoms or an aromatic group of 6 to 12 carbon atoms), and examples thereof include acetoxy, propionoxy, butyloxy and benzoyloxy.

The alkenyloxy group is desirably an alkenyloxy group of about 3 to 10 carbon atoms, and examples thereof include isopropenyloxy, isobutenyloxy and 1-ethyl-2-methylvinyloxy.

The iminooxy group (R'R"=C=N-O-, also referred to as "oxyimino group" or "ketoxime group") is desirably an iminooxy group of about 3 to 10 carbon atoms, and examples thereof include ketoxime, dimethylketoxime, methylethylketoxime, diethylketoxime, cyclopentanoxime and cyclohexanoxime.

The amino group is desirably an amino group of 1 to 10 carbon atoms, and examples thereof include N-methylamino, N-ethylamino, N-propylamino, N-butylamino, N,N-dimethylamino, N,N-diethylamino and cyclohexylamino. The amide group is desirably an amide group of 2 to 10 carbon atoms in all, and examples thereof include N-methylacetamide, N-ethylacetamide and N-methylbenzamide.

The aminooxy group is desirably an aminooxy group of 2 to 10 carbon atoms in all, and examples thereof include N,N-dimethylaminooxy and N,N-diethylaminooxy.

R¹ and R are each independently an unsubstituted or substituted monovalent hydrocarbon group of 1 to 12 carbon atoms, preferably 1 to 10 carbon atoms, particularly preferably 1 to 8 carbon atoms, and examples of such monovalent hydrocarbon groups include an alkyl group, an alkenyl group, an aryl group, a cycloalkyl group and an aralkyl group.

The alkyl group may be any of straight-chain, branched and alicyclic alkyl groups, and is preferably a straight-chain or branched alkyl group of 1 to 10 carbon atoms, preferably 1 to 8 carbon atoms, or a cycloalkyl group of 3 to 6 carbon atoms. Examples of the straight-chain or branched alkyl groups include methyl, ethyl, propyl, butyl, 2-ethylbutyl and octyl. Of these, methyl is particularly preferable. Examples of the alicyclic alkyl groups include cyclohexyl and cyclopentyl.

The alkenyl group is desirably an alkenyl group of 2 to 10 carbon atoms, preferably about 2 to 8 carbon atoms, and examples thereof include vinyl, hexenyl and allyl. The aryl group is desirably an aryl group of 6 to 15 carbon atoms, preferably about 6 to 12 carbon atoms, and examples thereof include phenyl, tolyl, xylyl, naphtyl and diphenyl. Of these, phenyl is particularly preferable.

The cycloalkyl group is desirably a cycloalkyl group of 3 to 8 carbon atoms and is, for example, cyclohexyl. The aralkyl group is desirably an aralkyl group of 7 to 10 carbon atoms in all, preferably 7 to 8 carbon atoms in all, and examples thereof include benzyl and 2-phenylethyl.

A part or all of hydrogen atoms bonded to the carbon atoms in the above groups R¹ may be replaced with halogen atoms, such as F, Cl, Br and I, or cyano groups. Examples of the halogenated alkyl groups include chloromethyl, 3,3,3-trifluoropropyl and 2-cyanoethyl.

As R in the formula [α], an unsubstituted monovalent hydrocarbon group is preferable, and methyl or phenyl is particularly preferable. When plural R¹ or plural R are present in the organopolysiloxane (b1) represented by the formula [α], plural R¹ may be the same as each other, plural R may be the same as each other, and R¹ and R may be the same as each other.

The organopolysiloxane (b1) desirably has a viscosity at 25°C of usually 25 to 1,500,000 mPa·s, preferably 25 to 500,000 mPa·s, more preferably 500 to 200,000 mPa·s, particularly preferably 1,000 to 100,000 mPa·s, taking into consideration coating property of the resulting composition, anti-sagging property given when the resulting composition is diluted with a solvent, etc.

In the present invention, the organopolysiloxane (b1) having condensing functional groups at both ends of a molecule is preferably organopolysiloxane having condensing functional groups of such a type as is cured by deoximation reaction.

In the moisture-curing organopolysiloxane-based composition, the component (b1), particularly a silicone rubber of deoxime curing type, is desirably contained in an amount of usually 20 to 80% by weight, preferably 40 to 70% by weight, from the viewpoint of enhancement of coating efficiency.

### Curing composition (b2)

The curing composition (b2) is formed by subjecting the organopolysiloxane (b1) having condensing functional groups at both ends of a molecule, typically oxime group-containing organopolysiloxane (b0), and the extender pigment, typically silica, together to contact treatment (e.g., mixing) with heating or without heating. In the present invention, for preparing the component (b2), materials for forming the component (b1) may be used instead of the component (b1) that is a polymer.

When contact of the component (b1) with the extender pigment such as silica is carried out with heating or without heating, a close contact product of the component (b1) with silica or the like is obtained, and prevention of sagging of the resulting paint or increase of film thickness tends to be advantageously performed.

Examples of the extender pigments include silica, calcium carbonate, talc, mica, clay, kaolin and barium sulfate. Of these, silica and calcium carbonate are preferable, and silica is particularly preferable, from the viewpoints of coating workability of the resulting paint and handling of the paint. These extender pigments may be used singly or in combination of two or more kinds.

Silica that is preferably used as the extender pigment is the same as silica described in the aforesaid Japanese Patent Laid-Open Publication No. 181509/2001 or the aforesaid Japanese Patent Laid-Open Publication No. 139816/2001, and the curing composition (particularly thermal contact treatment product) is the same as the component (B) described in these publications.

That is to say, silica includes hydrophilic silica (surface-untreated silica), such as wet process silica (hydrated silica) and dry process silica (fumed silica, anhydrous silica), and surface-treated hydrophobic silica, such as hydrophobic wet process silica and hydrophobic fumed silica.

In the present invention, as the silica component, hydrophobic silica and hydrophilic silica may be used in combination, or hydrophobic silica may be used singly.

In the case where hydrophobic silica and hydrophilic silica are used in combination in the invention, it is preferable that at least the hydrophilic silica has been subjected to heat treatment together with a part or the whole of the component (b1), and it is more preferable that both of the hydrophilic silica and the hydrophobic silica have been subjected to heat treatment together with a part or the whole of the component (b1)

In the case where hydrophobic silica is used singly in the invention, the hydrophobic silica has been subjected to heat treatment together with a part or the whole of the component (b1).

Of the above silica, the wet process silica has an adsorbed water content (also referred to as a "water content") of usually about 4 to 8%, a bulk density of 200 to 300 g/L, and a primary particle diameter of 10 to 30 mµ. Although the specific surface area (BET surface area) of the wet process silica has only to be not less than 10 m²/g, it is preferably 50 to 800 m²/g, more preferably about 100 to 300 m²/g.

The dry process silica (fumed silica) has a water content of usually not more than 1.5%.

Immediately after preparation, the dry process silica has a water content (initial water content) of low level such as not more than 0.3%, but when the silica is allowed to stand, it adsorbs moisture to increase a water content, and after a lapse of several months from preparation, the water content becomes, for example, about 0.5 to 1.0%. Although the bulk density of the dry process silica varies depending upon the type of the silica and is not determined indiscriminately, it is, for example, 50 to 100 g/L. The primary particle diameter of the dry process silica is in the range of 8 to 20 mµ. Although the specific surface area (BET surface area) of the dry process silica has only to be not less than 10 m²/g, it is preferably 100 to 400 m²/g, more preferably about 180 to 300 m²/g.

The hydrophobic fumed silica is one obtained by surface-treating the dry process silica with an organosilicon compound, such as methyltrichlorosilane, dimethyldichlorosilane, hexamethyldisilazane, hexamethylcyclotrisiloxane or octamethylcyclotetrasiloxane. The amount of water adsorbed by the hydrophobic fumed silica with time is small, and the water content of this silica is usually not more than 0.3% and in many cases 0.1 to 0.2%. Although the specific surface area of the hydrophobic fumed silica has only to be not less than 10 m²/g, it is preferably 100 to 300 m²/g, more preferably 120 to 230 m²/g. The primary particle diameter thereof is 5 to 50 mµ, and the bulk density thereof is 50 to 500 g/L.

In case of the hydrophobic fumed silica having been heat treated together with the component (b1) (heat treated hydrophobic fumed silica), water adsorbed on a surface of the hydrophobic silica has been physically reduced or removed, and the water content is usually not more than 0.2%, preferably not more than 0.1%, particularly preferably 0.05 to 0.1%, and other property values such as bulk density are the same as those of the hydrophobic silica.

In the moisture-curing organopolysiloxane-based composition, the component (b2) (curing composition (b2)) is desirably contained in an amount of usually 1 to 100 parts by weight, preferably 2 to 50 parts by weight, particularly preferably 5 to 30 parts by weight, based on 100 parts by weight of the component (b1).

When the curing composition (b2) is contained in the above amount in the moisture-curing organopolysiloxane-based composition, the composition can provide a coating film of excellent film strength and film hardness, has excellent thixotropic property and proper viscosity and can be favorably applied by spray coating. For example, it can form a coating film (tie coat) of large thickness by one coating operation even on a surface of a base standing upright, and it can be applied thick to a certain extent even by one coating operation, so that coating efficiency can be enhanced and labor can be saved. Therefore, the above amount is preferable.

Further, it is desirable that the component (b2) is contained in an amount of usually 1 to 40% by weight, preferably 10 to 20% by weight, in the moisture-curing organopolisiloxane-based composition, because thick coating by one coating operation becomes possible and coating efficiency can be enhanced.

If the amount of the component (b2) is less than the lower limit of the above range, sufficient film strength and film hardness are not obtained. Moreover, desired thixotropic property is not obtained, and therefore, desired large film thickness is not obtained occasionally by spray coating of one coating operation. If the amount of the component (b2) is more than the upper limit of the above range, viscosity of the resulting paint becomes excessively high, and it becomes necessary to dilute the paint with a solvent such as a thinner to a proper viscosity suitable for coating, so that desired large film thickness is not obtained occasionally by spray coating of one coating operation.

In the case where the hydrophobic silica (i) such as hydrophobic fumed silica and the hydrophilic silica (ii) such as surface-untreated silica are used in combination for the component (b2) (i.e., curing composition (b2)) in the invention, they are desirably used in such amounts that the weight ratio ((i)/(ii)) becomes 1/99 to 99/1, preferably 20/80 to 80/20, particularly preferably 30/70 to 70/30. When the hydrophobic silica (i) and the hydrophilic silica (ii) are used in combination in such a weight ratio, the resulting moisture-curing organopolysiloxane-based composition exhibits excellent paint stability in the stages of preparation, keeping and storage and has sufficient thixotropic property, and a tie coat (bonding film) obtained by curing the composition tends to have excellent film strength and film hardness.

It is preferable that the tie coat of the invention substantially contains no antifouling agent similarly to the organopolysiloxane-based antifouling coating film.

### Silane coupling agent (b3)

In the present invention, the moisture-curing organopolysiloxane-based composition used for forming the tie coat may further contain a silane coupling agent (b3) in order to enhance interlaminar bond strength.

As the silane coupling agent (b3), there can be used, for example, "organosilane or its partial hydrolyzate (C)" described in the paragraphs [0051] to [0054] of Japanese Patent Laid-Open Publication No. 181509/2001, "adhesion reinforcing agent (silane compound)" described in the paragraphs [0031] to [0032] of Japanese Patent Laid-Open Publication No. 80564/2002 (Japanese Patent Application No. 268207/2000), or a component (A) of claim 1 of National Publication of International Patent No. 505845/1993, more specifically, "aminosilane materials" described from the 9th line on the upper left-hand section in page 3 to the 5th line from the bottom on the lower left-hand section in page 3 of the publication.

In the case where the organopolysiloxane component (b1) having condensing functional groups at both ends of a molecule is represented by the aforesaid formula [α], and in the formula [α], W is a hydroxyl group and a is 2, the silane coupling agent (b3) is preferably further contained in the composition in addition to the component (b1) and the component (b2).

The silane coupling agent (b3) is, for example, organosilane represented by the formula [I]: R¹ₐSiX₄₋ₐ (wherein R¹ is an unsubstituted or substituted monovalent hydrocarbon group of 1 to 8 carbon atoms, which is the same as R or R¹ in the formula [α], X is a hydrolyzable group which is the same as W in the formula [α], and a is 0 or 1) or its partial hydrolyzate described in Japanese Patent Laid-Open Publication No. 181509/2001.

That is to say, in the case where organopolysiloxane having hydroxyl groups (-OH) at both ends of a molecule (chain molecule, molecular chain), specifically, curing organopolysiloxane in which both ends of a molecular chain are capped with silanol groups (≡Si-OH), is used as the component (b1), it is particularly preferable to use the component (b1) and the component (b3) functioning as a crosslinking agent or a curing agent in combination.

In the case where curing organopolysiloxane in which both ends of a molecule are capped with hydrolyzable groups is used as the component (b1), curing can sufficiently proceed even if the curing agent component (b3) is not present, but also in this case, it is more preferable to use the component (b3).

X is a hydrolyzable group which is the same as W in the formula [α]. Examples of the organosilanes represented by the formula [I] and their (partial) hydrolyzates include methyltrimethoxysilane, methyltri(methylethylketoxime)silane, methyltripropenyloxysilane, methyltriacetoxysilane, silane compounds wherein a methyl group of these silane compounds is replaced with a vinyl group, a phenyl group, a trifluoropropyl group or the like (e.g., vinyltrimethoxysilane), and their partial hydrolyzates. In this case, the hydrolyzable group is preferably a ketoxime group.

Although the silane coupling agent (b3) such as "organosilane or its hydrolyzate (b3)" can be used in an amount of 1 to 60 parts by weight based on 100 parts by weight of the organopolysiloxane (b1), it is desirably contained in an amount of usually 1 to 20 parts by weight, preferably 2 to 10 parts by weight, in the moisture-curing organopolysiloxane-based composition. When the organosilane or its hydrolyzate (b3) is contained in such an amount in the composition, crosslinking reaction of the component (b1) favorably proceeds, and the resulting coating film (tie coat) has appropriate hardness and tends to have economical advantage.

The silane coupling agent is specifically, for example, "KBE 1003" (vinyltriethoxysilane, available from Shin-Etsu Chemical Co., Ltd.) or "KBM403" (γ-glycidoxypropyltrimethoxysilane, available from Shin-Etsu Chemical Co., Ltd.).

From the viewpoint of enhancement of adhesion to a primary rust-preventive coating film, the silane coupling agent is used in an amount of usually 0.05 to 5% by weight, preferably 0.1 to 2% by weight, in the moisture-curing organopolysiloxane-based composition.

As the silane coupling agent (b3), an aminosilane compound may be used as described above. Examples of the aminosilane compounds include compounds described as "aminosilane materials (A)" in the aforesaid National Publication of International Patent No. 505845/1993 (patent document 6).

Examples of the aminosilane materials (aminosilane compounds) include the following compounds (i), (ii) and (iii):
(i) primary amine functional silane represented by the formula [I]:

   (RO)ₓR₍₃₋ₓ₎SiR¹NHR² [I]

   wherein plural R may be the same or different and are each a monovalent hydrocarbon groups of C1 to C12 having an ether bond if desired, R¹ is an alkylene group of C2 to C4 or a divalent aliphatic ether group of C3 to C8, R² is H or a primary amine group, and X is 2 or 3;
(ii) a reaction product of the primary amine functional silane (i) with epoxy functional silane represented by the following formula [II]:

   A-Si(B)ₐ(OB)₍₃₋ₐ₎ [II]

   wherein A is an epoxide substituted monovalent hydrocarbon group of C4 to C12, plural B may be the same or different and are each an alkyl group of C1 to c4, and a is 0 or 1; and
(iii) a reaction product of the primary amine functional silane (i) with α,ω-dihydroxypolydimethylsiloxane represented by the following formula [III]:

   HO(Si(CH₃)₂O)_{y}H [III]

   wherein y is a number of 2 to 60.

As described in the above publication (patent document 6), the primary amine functional silane (i) is, for example, 3-aminopropyltrimethoxysilane ((C₂H₅O)₃Si-(CH₂)₃-NH₂, trade name: KBM-903) or (CH₃O)Si(CH₂)₃NH(CH₂)NH₂, and the reaction product (ii) is, for example, (C₂H₅O)₃Si(CH₂)₃-NH-CH₂-CH(OH)-CH₂-O(CH₂)₃Si(OCH₃)₃.

The aminosilane compound is used in the same amount as that of the aforesaid "organosilane or its hydrolyzate".

### Silicone oil (c4)

The moisture-curing organopolysiloxane-based composition for use the invention may contain such a silicone oil (c4) as previously described, that is, the silicone oil (c4) described in the paragraphs [0058] to [0071] of Japanese Patent Laid-Open Publication No. 181509/2001 previously proposed by the present applicant.

In the present invention, the silicone oil (c4), preferably one or more kinds of the silicone oil [II], the silicone oil [III] and the silicone oil [IV], may be contained in the total amount of 0.1 to 200 parts by weight, preferably 20 to 100 parts by weight, based on 100 parts by weight of the component (b1).

### Preparation of moisture-curing organopolysiloxane-based composition

The moisture-curing organopolysiloxane-based composition used for forming the tie coat (B) of the invention or a tie coat (layer) of the later-described composite coating film (C) of the invention can be prepared by heat-treating a part or the whole of the component (b1), namely, organopolysiloxane (b1) having condensing functional groups at both ends of a molecule (or its materials (b1)) and at least hydrophilic silica of hydrophilic silica and hydrophobic silica, preferably both of hydrophilic silica and hydrophobic silica (or hydrophobic silica when the hydrophobic silica is used alone), at a temperature of not lower than 100°C and not higher than decomposition temperatures of the compounding components, preferably 100 to 300°C, more preferably about 140 to 200°C, at atmospheric pressure or under reduced pressure for usually 30 minutes to 3 hour, then adding a residue of the component (b1), the component (b2), and if necessary, the component (b3), and then if necessary adding the organopolysiloxane (c4) having no condensing functional group that is an unreactive silicone oil.

Instead of the above treatment with heating, contact treatment without substantial heating (specifically, at room temperature or a temperature of a little higher than room temperature) may be carried out for about 1 to 8 hours.

It is also possible that hitherto known compounding ingredients, such as organosiloxane curing catalyst, antifouling agent, thixotropic property imparting agent, plasticizer, inorganic dehydrating agent (stabilizer), anti-sagging/anti-settling agent (thickening agent), coloring pigment, dye, other film-forming components, solvent (e.g., xylene), germicide, antifungal agent, anti-aging agent, antioxidant, antistatic agent, flame retardant, heat conduction improver and adhesion imparting agent, are added in given amounts at once or in an arbitrary order and then stirred or mixed to dissolve or disperse them in a solvent.

When hydrophilic silica and hydrophobic silica are used in combination as silica as described above, at least hydrophilic silica, preferably both of hydrophilic silica and hydrophobic silica, are heat-treated together with the component (b1). As a result, the component (b1) and the component (b2) in the resulting composition have excellent affinity for each other, aggregation of the component (b2) does not take place, and the resulting moisture-curing organopolysiloxane-based composition exhibits proper fluidity and proper thixotropic property, so that a coating film of desired sufficient thickness can be formed by a small number of coating operation times, such as one coating operation, even on a perpendicular coating surface.

For stirring or mixing the above components, a hitherto known mixing/stirring apparatus, such as Ross mixer, planetary mixer or Shinagawa type universal stirring machine, is properly used. As the catalyst (b5), for example, a catalyst described in Japanese Patent No. 2522854 (e.g., metallic compound such as titanium compound or tin compound) is preferably used. Specifically, there can be mentioned, for example, tin carboxylates, such as tin naphthenate and tin oleate; tin compounds, such as dibutyltin diacetate, dibutyltin dioctoate, dibutyltin dilaurate, dibutyltin dioleate, dibutyltin oxide, dibutyltin dimethoxide and dibutylbis(triethoxysiloxy)tin; titanic acid esters or titanium chelate compounds, such as tetraisopropoxytitanium, tetra-n-butoxytitanium, tetrakis(2-ethylhexoxy)titanium, dipropoxybis(acetylacetonato)titanium and titanium isopropoxyoctyl glycol; organometallic compounds, such as zinc naphthenate, zinc stearate, zinc 2-ethyloctoate, iron 2-ethylhexoate, cobalt 2-ethylhexoate, manganese 2-ethylhexoate, cobalt naphthenate and alkoxyaluminum compound; aminoalkyl group substituted alkoxysilanes, such as 3-aminopropyltrimethoxysilane and N-β(aminoethyl)γ-aminopropyltrimethoxysilane; amine compounds and their salts, such as hexylamine, dodecyldodecylamine phosphate, dimethylhydroxylamine and diethylhydroxylamine; quaternary ammonium salts, such as benzyltriethylammonium acetate; lower fatty acid salts, such as potassium acetate, sodium acetate and lithium oxalate; and silanes or siloxanes having guanidyl group, such as tetramethylguanidylpropyltrimethoxysilane, tetramethylguanidylpropylmethyldimethoxysilane and tetramethylguanidylpropyltris(trimethylsiloxy)silane.

Of the above curing catalysts, the metallic compound (b5) is preferable, and the tin compound or the titanium compound is more preferable.

The catalyst is used in an amount of not more than 10 parts by weight, preferably not more than 5 parts by weight, more preferably not more than 1 part by weight, based on 100 parts by weight of the component (b1), and when the catalyst is used, the lower limit of the amount used is preferably 0.0001 part by weight (namely, 1 ppm), particularly preferably 0.001 part by weight (namely, 10 ppm).

It is preferable that the moisture-curing organopolysiloxane-based composition substantially contains no antifouling agent.

### Plasticizer (chlorinated paraffin, etc.)

Examples of the plasticizers include TCP (tricresyl phosphate), chlorinated paraffin, polyvinyl ethyl ether and polydimethylsiloxane. These plasticizers can be used singly or in combination of two or more kinds. The plasticizer contributes to enhancement of crack resistance of the resulting coating film (tie coat).

### Inorganic dehydrating agent

The inorganic dehydrating agent functions also as a stabilizer and can further improve storage stability of the moisture-curing organopolysiloxane-based composition. Examples of the inorganic dehydrating agents include anhydrous gypsum (CaSO₄), synthetic zeolite-based adsorbers (trade name: Molecular Sieves, etc.) and silicates. Of these, anhydrous gypsum and Molecular sieves are preferably used. These inorganic dehydrating agents are used singly or in combination or two or more kinds.

In the moisture-curing organopolysiloxane-based composition containing the inorganic dehydrating agent, the inorganic dehydrating agent may be contained in an amount of usually 0.1 to 10% by weight, preferably about 0.1 to 5% by weight.

### Carboxylic acid metal salt

In the moisture-curing organopolysiloxane-based composition, a carboxylic acid metal salt may be further contained.

As the carboxylic acid metal salt, one having a molecular weight of usually 50 to 1000, preferably 100 to 600, is used. Examples of carboxylic acids to constitute such a carboxylic acid metal salt include carboxylic acids having alicyclic structure (e.g., naphthenic acid), carboxylic acids having aromatic ring structure (e.g., α-(2-carboxyphenoxy)stearic acid), rosin-based resin acids and fatty acids. Of these, naphthenic acid, rosin-based resin acids and fatty acids are preferable.

### Anti-sagging/anti-settling agent (thixotropic agent)

Examples of the anti-sagging/anti-settling agents (thixotropic agents) include organic clay-based agent, salts, such as stearate salts, lecithin salts and alkylsulfonic acid salts of Al, Ca and Zn, polyethylene wax, amide wax, hydrogenated castor oil wax-based agent, polyamide wax-based agent, mixtures thereof, synthetic silica fine powder and polyethylene oxide wax. Of these, polyamide wax, synthetic silica fine powder, polyethylene oxide wax and organic clay-based agent are preferably used. The anti-sagging/anti-settling agent is on the market, and examples thereof include those under the trade names of "Disperon 305", "Disperon 4200-20" and "Disperson A630-20X" available from Kusumoto Chemicals, Ltd.

The anti-sagging/anti-settling agent is used in an amount of, for example, 0.1 to 10% by weight in the moisture-curing organopolysiloxane-based composition.

### Pigment

As the pigment, any of various pigments of organic or inorganic type hitherto known is employable.

Examples of the organic pigments include carbon black, phthalocyanine blue and Prussian blue. Examples of the inorganic pigments include those which are neutral and unreactive, such as titanium white, red iron oxide, barite powder, silica, calcium carbonate, talc, chalk and iron oxide powder; and those (active pigments) which are basic and reactive to acidic substances contained in a paint, such as zinc white, (ZnO, zinc oxide), white lead, red lead, zinc dust and lead suboxide powder. Further, various colorants such as dyes may be contained. The above various pigments are used in the total amount of 0.5 to 45% by weight, preferably about 3 to 10% by weight, in the moisture-curing organopolysiloxane-based composition.

### Other film-forming components

In the moisture-curing organopolysiloxane-based composition, film-forming components other than the organopolysiloxane (b1) may be contained within limits not detrimental to the objects of the invention. Examples of such "other film-forming components" include water-slightly soluble or water-insoluble resins (also referred to as "water-slightly soluble/water-insoluble resins" hereinafter), such as acrylic resin, acrylic silicone resin, unsaturated polyester resin, fluororesin, polybutene resin, silicone rubber, urethane resin (rubber), polyamide resin, vinyl chloride-based copolymer resin, chlorinated rubber (resin), chlorinated olefin resin, styrene/butadiene copolymer resin, ethylene/vinyl acetate copolymer resin, vinyl chloride resin, alkyd resin, coumarone resin, trialkylsilyl acrylate (co)polymer (silyl-based resin) and petroleum resin.

### Other fillers, flame retardant, thixotropic property imparting agent, heat conduction improver, adhesive component, etc.

Examples of fillers other than those described above include metal oxides, such as diatomaceous earth, iron oxide, zinc oxide, titanium oxide and alumina, or metal oxides whose surfaces have been treated with silane compounds; metal carbonates, such as calcium carbonate, magnesium carbonate and zinc carbonate; and others, such as asbestos, glass fiber, carbon black, quartz powder, aluminum hydroxide, gold powder, silver powder, surface-treated calcium carbonate and glass balloon. These fillers may be used singly or in combination of two or more kinds.

Examples of the thixotropic property imparting agents include polyethylene glycol, polypropylene glycol and their derivatives. Examples of the flame retardants include antimony oxide and oxidized paraffin. Examples of the heat conduction improvers include boron nitride and aluminum oxide. Examples of the adhesive components include substances containing one or more kinds of alkoxysilyl group, epoxy group, hydrosilyl group, acrylic group and hydroxysilyl group, and mixtures of these substances.

### Solvent

Although a solvent may be contained or may not be contained in the moisture-curing organopolysiloxane-based composition for use in the invention, the above-mentioned various components can be used after they are dissolved or dispersed in a solvent when needed. As the solvent, any of various solvents usually added to antifouling paints, such as those of aliphatic, aromatic, ketone, ester, ether and alcohol types, are employable. Examples of the aromatic solvents include xylene and toluene. Examples of the ketone solvents include MIBK and cyclohexanone. Examples of the ether solvents include propylene glycol monomethyl ether and propylene glycol monomethyl ether acetate (PGMAC). Examples of the alcohol solvents include isopropyl alcohol.

Although the solvent can be used in any amount, it is used in an amount of, for example, 0.1 to 9999 parts by weight, preferably 1 to 50 parts by weight, based on 100 parts by weight of the component (b1). Further, the solvent is used in such an amount that the amount of the solvent in the moisture-curing organopolysiloxane-based composition becomes 1 to 99% by weight, preferably 5 to 50% by weight, particularly preferably 20 to 40% by weight. Taking into consideration coating property (anti-sagging property) and film thickness obtained by one coating operation, the viscosity (25°C, B type viscometer, No. 3 rotor) of the moisture-curing organopolysiloxane-based composition containing the solvent in the above amount is, for example, 0.01 to 500 poise (25°C), preferably about 0.1 to 200 poise (25°C), and in other words, it is 1 to 50,000 mPa·s, preferably about 10 to 20,000 mPa·s.

Next, the first to the third organopolysiloxane-based antifouling composite coating films (composite coating films) of the invention are described.

The first and the second composite coating films are described first.

### First and second organopolysiloxane-based antifouling composite coating films

The first organopolysiloxane-based antifouling composite coating film (first composite coating film) of the invention is formed by closely laminating, on a base, a tie coat (B) and the below-described finish coat (C) obtained by applying and curing an organopolysiloxane-based antifouling paint, in this order from the base side toward the surface that comes into contact with seawater or the like (base/(B)/(C)).

The first composite coating film of the invention having the above constitution exerts such effects that interlaminar bond strength between the base and the finish coat is more enhanced than conventional composite coating films, the coating film has excellent antifouling performance, and because the coating film contains no antifouling agent, it rarely becomes a burden to the environment.

In the second organopolysiloxane-based antifouling composite coating film (second composite coating film) of the invention, a primary rust-preventive coating film, the tie coat (B) and the finish coat (C) are closely laminated on a base in this order (base/primary rust-preventive coating film/(B)/(C)), and this second composite coating film differs from the first composite coating film in that prior to provision of the tie coat (B) on the base surface, a primary rust-preventive coating film, in particular, epoxy-based rust-preventive coating film is formed on the base surface by applying and curing a primary rust-preventive paint, as described above.

The second composite coating film provided with the primary rust-preventive coating film as above exerts the same effects as those of the first composite coating film, that is, interlaminar bond strength between the primary rust-preventive coating film on the base surface and the finish coat is enhanced, the coating film has excellent antifouling performance, and because the coating film contains no antifouling agent, it rarely becomes a burden to the environment. In addition, the second composite coating film is superior to the first composite coating film in enhancement of rust prevention property.

### Tie coat (B)

The tie coat (B) to constitute the first or the second composite coating film is the same as the aforesaid tie coat.

In the first composite coating film of the invention, the thickness of each film is not specifically restricted, but the thickness of the tie coat (B) is, for example, about 50 to 250 µm, the thickness of the finish coat (C) is about 75 to 300 µm, and the total thickness of these films is, for example, about 150 to 550 µm.

In the second composite coating film of the invention, the thickness of the primary rust-preventive coating film is not specifically restricted, but the thickness thereof is, for example, about 100 to 500 µm, the thickness of the tie coat (B) is, for example, about 50 to 200 µm, the thickness of the finish coat (C) is about 75 to 300 µm, and the total thickness of these films is, for example, about 250 to 1000 µm.

### Finish coat (C)

The finish coat (C) is formed on a surface of the tie coat (B) by applying and curing an organopolysiloxane-based antifouling paint. In particular, a preferred embodiment of the finish coat (C) is formed by applying and curing a three-pack type organopolysiloxane-based curing composition comprising (c1) a main agent comprising organopolysiloxane having condensing functional groups at both ends of a molecule, (c2) a curing agent component comprising tetraalkoxysilicate or its condensate and (c3) a curing accelerator component comprising a metallic compound.

In the three-pack type organopolysiloxane-based curing composition for forming the finish coat (C),
the curing agent comprising tetraalkoxysilicate or its condensate in the curing component (c2) is desirably contained in an amount of usually 0.5 to 15 parts by weight, preferably 1 to 10 parts by weight, and
the curing accelerator comprising a metallic compound in the curing accelerator component (c3) is desirably contained in an amount of usually 0.1 to 10 parts by weight, preferably 0.5 to 5 parts by weight,
each amount being based on 100 parts by weight of the organopolysiloxane (c1) in the main agent (c1).

In the above description of the amounts of the components, an extender pigment such as silica, a coloring pigment, a solvent and the like in the main agent (c1) are not included in the amount of the organopolysiloxane (c1); a solvent and the like in the curing agent component (c2) are not included in the amount of the curing agent comprising tetraalkoxysilicate or its condensate; and a solvent and the like in the curing accelerator component (c3) are not included in the amount of the curing accelerator comprising a metallic compound.

With regard to the compounding ratio between the main agent (c1), the curing agent component (c2) and the curing accelerator component (c3), it is desirable from the viewpoint of coating workability that the main agent (c1) is contained in an amount of 50 to 85 parts by weight, the curing agent component (c2) is contained in an amount of 10 to 40 parts by weight, and the curing accelerator component (c3) is contained in an amount of 1 to 10 parts by weight, in the total 100 parts by weight of the components ((c1)+(c2)+(c3)).

In the storage, keeping and transportation of the three-pack type organopolysiloxane-based curing composition, the components (c1) to (c3) are separately kept in different containers to inhibit progress of reactions such as self condensation reaction and crosslinking reaction, and in the use of the composition, the components (c1) to (c3) have only to be mixed.

When the components (c1) to (c3) of the three-pack type organopolysiloxane-based curing composition are mixed, curing reaction proceeds under heating as a matter of course, but the reaction proceeds even at a temperature of about room temperature (15 to 25°C), and hence heating is not particularly necessary. However, heating may be carried out to promote the reaction if desired, or heating, air blowing or the like may be carried out to forcedly evaporate or remove the solvent.

For providing the rust-preventive coating film (A), the tie coat (B), the finish coat (C) and the like on the base surface, one film (layer) of them is completely dried and cured, and then the subsequent film (layer) may be formed thereon. From the viewpoint of enhancement of interlaminar bond strength, however, it is preferable that when the tie coat (B) is in a state of semi-curing to touch, that is, when the tie coat is not completely cured, the finish coat is applied and cured. If the films (layers) are formed in this manner, uniform thickness of each layer can be ensured, and the interlaminar bond strength can be enhanced. Further, each layer may be made to have a desired thickness by carrying out coating operation once to plural times.

The three-pack type organopolysiloxane-based curing composition can be applied by the use of a hitherto known coating machine or the like.

Next, the components (c1) to (c3) to constitute the three-pack type organopolysiloxane-based curing composition are described.

### (c1) Main agent

The main agent (c1) comprising organopolysiloxane having condensing functional group at both ends of a molecule is included in the compounds represented by the aforesaid formula [α], similarly to the organopolysiloxane contained in the moisture-curing organopolysiloxane-based composition, and of such compounds, preferable is one represented by the following formula [c1]: 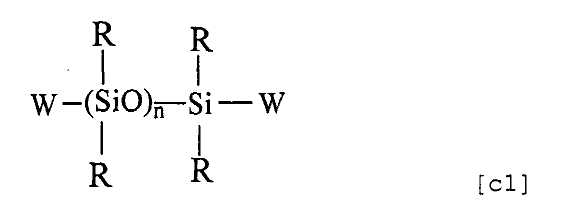 wherein W is a hydroxyl group (-OH) or a hydrolyzable group that is a condensing functional group, preferably a hydroxyl group, each R is independently an unsubstituted or substituted monovalent hydrocarbon group of 1 to 12 carbon atoms, plural R may be the same or different, and n is an integer of 5 or more, preferably 8 or more.

W is the same as W in the formula [α], and examples of such hydrolyzable groups include an alkoxy group, an acyloxy group, an alkenyloxy group, an iminooxy group, an amino group, an amide group and an aminooxy group.

R is, for example, an alkyl group of 1 to 12 carbon atoms, a phenyl group, a vinyl group or an allyl group. Plural R may be the same as or different from one another, and in a preferred embodiment, plural R are all the same groups as one another.

In the present invention, the organopolysiloxane (c1) represented by the formula [c1] can be used singly or in combination of two or more kinds.

The organopolysiloxane (c1) is, for example, α,ω-dihydroxydimethylpolysiloxane (n=5 ~ 3000).

The organopolysiloxane (c1) has a viscosity of about 20 to 200,000 mPa·s, preferably about 1,000 to 50,000 mPa·s, particularly preferably about 2,000 to 25,000 mPa·s, and is oligomeric or polymeric.

In the main agent (c1), a filler such as silica (trade name: Aerosil), a coloring pigment, a solvent (e.g., xylene), a silicone oil (c4) described later, etc. may be contained in addition to the organopolysiloxane (c1).

In the main agent (c1), the content of the organopolysiloxane (c1) or the like is not specifically restricted, but for example, the organopolysiiloxane (c1) is usually contained in an amount of about 60 to 80% by weight, the filler is usually contained in an amount of about 5 to 10% by weight, the coloring pigment is usually contained in an amount of about 10 to 20% by weight, and the solvent is usually contained in an amount of about 20 to 40% by weight.

### (c2) Curing agent component

In the tetraalkoxysilicate (tetraalkoxysilane) or its condensate in the curing agent component (c2), the alkyl group R may be any of straight-chain, branched and alicyclic alkyl groups, and is preferably a straight-chain or branched alkyl group of 1 to 10 carbon atoms, preferably 1 to 8 carbon atoms, or a cycloalkyl group of 3 to 6 carbon atoms. Examples of the straight-chain or branched alkyl groups include methyl, ethyl, propyl, butyl, 2-ethylbutyl and octyl. Of these, methyl is particularly preferable. Examples of the alicyclic alkyl groups include cyclohexyl and cyclopentyl.

In the tetraalkoxysilicate, plural alkyl groups R may be the same as or different from one another, and they are preferably the same as one another.

Examples of such tetraalkoxysilicates (tetralkoxysilanes) include tetramethoxysiliane, tetraethoxysilane, tetrapropoxysilane, tetrabutoxysilane, tetra(2-ethylbutoxy)silane and tetraoctoxysilane.

A condensate of the tetraalkoxysilane is, for example, a substance wherein 1.2 to 5.0 of the above tetraalkoxysilanes on an average is condensed.

In the present invention, a silicone oil (c4) described later, a solvent, etc. may be contained in the curing agent component (c2), in addition to the tetraalkoxysilicate (tetraalkoxysilane) or its condensate.

In the curing agent component (c2), the curing agent such as tetraethoxysilane is desirably contained in an amount of, for example, 10 to 20% by weight, the condensation-unreactive silicone oil such as a methylphenyl silicone oil is desirably contained in an amount of 30 to 60% by weight, and the organic solvent such as xylene is desirably contained in an amount of 30 to 60% by weight, from the viewpoint of coating workability and handling of the resulting paint.

### (c3) Curing accelerator component

The curing accelerator comprising a metallic compound in the curing accelerator components (c3) is preferably a tin compound, such as an organotin compound, specifically dibutyltin dilaurate, dibutyltin dimaleate or dibutyltin mercaptide. Further, the aforesaid organosiloxane curing catalysts which are used in the preparation of the moisture-curing organopolysiloxane-based composition when needed can be used singly or in combination of two or more kinds.

In the present invention, the below-described organopolysiloxane (c4) (another name: silicone oil) having no condensing functional group may be contained in one or more of the components (c1) to (c3).

In the curing accelerator component (c3), the curing accelerator such as dibutyl acetate is desirably contained in an amount of, for example, 10 to 20% by weight, and the organic solvent such as acetylacetone is desirably contained in an amount of 80 to 90% by weight, from the viewpoint of coating workability and handling of the resulting paint.

### Silicone oil (c4)

The moisture-curing organopolysiloxane-based composition for use in the invention may contain a silicone oil (c4) that is described in the paragraphs [0058] to [0071] of Japanese Patent Laid-Open Publication No. 181509/2001 previously proposed by the present applicant.

The silicone oil (c4) is not specifically restricted provided that it is an unreactive (non-condensing) silicone oil (e.g., silicone oil [II] or [IV]) or a silicone oil which bleeds out from a cured product of the moisture-curing organopolysiloxane-based composition (e.g., silicone oil having a group represented by the following formula [III]). The silicone oil (c4) is preferably an unreactive silicone oil represented by the following formula [II] or [IV].

It is presumed that, of such silicone oils (c4), the silicone oil [II] or [IV] does not exhibit reactivity to the components (c1) and (c2) or self-condensation property and has a function of forming an antifouling functional layer (film) on the coating film (layer) surface. It is also presumed that the silicone oil [III] reacts with the component (c1) or the like that is a film-forming component to form a cured film and is hydrolyzed with time when immersed in seawater for a long period of time, whereby the end group becomes a group having an alcoholic hydroxyl group (≡Si-R⁴-OH), and as a result, the silicone oil gradually bleeds out on the composite coating film surface and exerts an effect of preventing adhesion of marine organisms.

(R²)₃SiO(SiR³₂O)ₙSi(R²)₃ [II]

In the formula [II], plural R² may be the same as or different from one another and are each an alkyl group of 1 to 10 carbon atoms, an aryl group, an aralkyl group or a fluoroalkyl group, plural R³ may be the same as or different from each other and are each an alkyl group of 1 to 10 carbon atoms, an aryl group, an aralkyl group or a fluoroalkyl group, and n is a number of 0 to 150.

≡Si-R⁴-O-SiR⁵_{b}Y_{3-b} [III]

In the formula [III], R⁴ is an unsubstituted or substituted divalent hydrocarbon group or a divalent hydrocarbon group having an ether bond, R⁵ is an unsubstituted or substituted monovalent hydrocarbon group, Y is a hydrolyzable group, and b is 0, 1 or 2.

R⁶ₓSi(R⁷-Z)_{y}O_{(4-x-y)/2} [IV]

In the formula [IV], R⁶ is a hydrogen atom or an alkyl group of 1 to 10 carbon atoms, an aryl group or an aralkyl group, R⁷ is a divalent aliphatic hydrocarbon group of 1 to 10 carbon atoms in which an ether group, an ester group or -NH- may be present, Z is a monovalent polar group, namely, an amino group, a carboxyl group, an epoxy group or a polyethylene glycol or polypropylene glycol group whose end may be capped with an alkyl group of 1 to 6 carbon atoms or an acyl group, and x and y are numbers satisfying the conditions of 0.01≤x<3.99, 0.02≤y<4 and 0.02≤x+y<4.

As the silicone oil [II] of the silicone oils (c4), such a silicone oil as described in Japanese Patent Laid-Open Publication No. 316933/1998 is employable, and desirable is a silicone oil having a number-average molecular weight Mn of 180 to 20,000, preferably 1,000 to 10,000, and a viscosity of 20 to 30,000 mPa·s, preferably 50 to 3,000 mPa·s.

Examples of the silicone oils [II] include dimethyl silicone oil wherein all of R² and R³ are methyl groups and phenylmethyl silicone oil wherein a part of methyl groups in the above dimethylsilicone oil are substituted with phenyl groups. Of these, methylphenyl silicone oil is preferable.

As the silicone oil having a group represented by the formula [III] (silicone oil [III]), a silicone oil described in Japanese Patent No. 2522854 proposed by the present applicant is employable, and desirable is a silicone oil having a number-average molecular weight of 250 to 20,000, preferably 1,000 to 10,000, and a viscosity of 20 to 30,000 mPa·s, preferably 50 to 3,000 mPa·s.

≡Si-R⁴-O-SiR⁵_{b}Y_{3-b} [III]

In the formula [III], R⁴ is an unsubstituted or substituted divalent hydrocarbon group or a divalent hydrocarbon group having an ether bond, R⁵ is an unsubstituted or substituted monovalent hydrocarbon group, Y is a hydrolyzable group, and b is 0, 1 or 2.

R⁴ is specifically an unsubstituted or substituted divalent hydrocarbon group, such as a methylene group, an ethylene group, a propylene group, a butylene group or a hexamethylene group, or a divalent hydrocarbon group having an ether bond, for example, represented, by - (CH₂)ₚ-O-(CH₂)_{q}- (wherein p and q are each independently an integer of 1 to 6).

R⁵ is an unsubstituted or substituted monovalent hydrocarbon group of 1 to 8 carbon atoms, similarly to R¹ in the formula [I]. Y is the same hydrolyzable group as X in the formula [I].

The silicone oil [III] having at least one group represented by the formula [III] is, for example, a silicone oil wherein a hydroxyl group is capped with a hydrolyzable group in such a silicone oil represented by (CH₃)₃SiO[(CH₃)₂SiO]ₘ[R⁷R⁸SiO]ₙ(CH₃)₂SiC₃H₆-OH, HO-C₃H₆-[(CH₃)₂SiO][(CH₃)₂SiO]ₘ[R⁷R⁸SiO]ₙ-(CH₃)₂Si-C₃H₆-OH or (CH₃)₃SiO[(CH₃)₂SiO]ₘ[R⁷R⁸SiO]ₙ[(CH₃)(C₃H₆-OH)SiO]ₗ[(CH₃)₂SiCH₃] as described in the aforesaid Japanese Patent No. 2522854. In the above formulas, at least one of R⁷ and R⁸ are each an unsubstituted or substituted monovalent hydrocarbon group selected from groups other than a methyl group, e.g., an aryl group, such as phenyl or tolyl, an aralkyl group, such as benzyl or β-phenylethyl, or a halogenated alkyl group, such as trifluoropropyl. m, n and l are each a positive number.

From the viewpoint of storage stability of the resulting composition, there can be also used a silicone oil obtained by allowing the above silicone oil to react with organosilane represented by the formula R⁵_{b}SiY_{3-b} (R⁵, y and b are the same as those in the formula [III]), such as (CH₃)₃SiO[(CH₃)₂SiO]ₘ[R⁷R⁸SiO]ₙ(CH₃)₂SiC₃H₆-O-R⁵_{b}SiY_{3-b}, HO-C₃H₆-[(CH₃)₂SiO][(CH₃)₂SiO]ₘ[R⁷R⁸SiO]ₙ-(CH₃)₂Si-C₃H₆-O-R⁵_{b}SiY_{3-b} or (CH₃)₃SiO[(CH₃)₂SiO]ₘ[R⁷R⁸SiO]ₙ[(CH₃)(C₃H₆-O-R⁵_{b}SiY_{3-b})SiO]ₗ[(Ch₃)₂SiCH₃].

As the silicone oil [IV], such a silicone oil as described in Japanese Patent Laid-Open Publication No. 316933/1998 is employable, and desirable is a silicone oil having a number-average molecular weight Mn of 250 to 30,000, preferably 1,000 to 20,000, and a viscosity of 20 to 30,000 mPa·s, preferably 50 to 3,000 mPa·s.

R⁶ₓSi(R⁷-Z)_{y}O_{(4-x-y)/2} [IV]

In the formula [IV], R⁶ is a hydrogen atom or an alkyl group of 1 to 10 carbon atoms, an aryl group or an aralkyl group, R⁷ is a divalent aliphatic hydrocarbon group of 1 to 10 carbon atoms in which an ether group, an ester group or -NH- may be present, Z is a monovalent polar group, namely, an amino group, a carboxyl group, an epoxy group or a polyethylene glycol or polypropylene glycol group whose end may be capped with an alkyl group of 1 to 6 carbon atoms or an acyl group, and x and y are numbers satisfying the conditions of 0.01≤x<3.99, 0.02≤y<4 and 0.02≤x+y<4.

As the silicone oil [IV], preferable is a silicone oil of the formula [IV] wherein R⁶ is a methyl group or a phenyl group and R⁷ is a methylene group, an ethylene group or a propylene group. When Z is a polyethylene glycol or polypropylene glycol group whose end may be capped with an alkyl group of 1 to 6 carbon atoms or an acyl group, the number of oxyethylene units or oxypropylene units as recurring units is preferably 10 to 60. Examples of the alkyl groups for end capping include a methyl group, an ethyl group, a propyl group and a butyl group, and examples of the acyl groups for end capping include a ketoxime group, an acetyl group and a propionyl group.

More specifically, examples of the silicone oils wherein the polar group Z is an amino group include "SF8417" (available from Dow Corning Toray Silicone Co., Ltd.), "ISI4700", "ISI4701" (available from Toshiba Silicones Co.), and "FZ3712", "AFL-40" (available from Nippon Unicar Co., Ltd.). Examples of the silicone oils wherein the polar group Z is a carboxyl group include "X142-411" (available from Toshiba Silicones Co.), "SF8418" (available from Dow Corning Toray Silicone Co., Ltd.), and "FXZ4707" (available from Nippon Unicar Co., Ltd.). Examples of the silicone oils wherein the polar group is an epoxy group include "SF8411" (available from Dow Corning Toray Silicone Co., Ltd.), "X142-301" (available from Toshiba Silicones Co.), and "L-93", "T-29" (available from Nippon Unicar Co., Ltd.). Examples of the silicone oils wherein the polar group Z is an alkyl group or an acryl group include "ISI4460", "ISI4445", "ISI4446" (available from Toshiba Silicones), "SH3746" "SH8400", "SH3749", "SH3700" (available from Dow Corning Toray Silicone Co., Ltd.), and "KF6009" (available from Shinetsu Silicone Co.).

In the present invention, the silicone oil (c4), preferably one or more of the silicone oil [II], the silicone oil [III] and the silicone oil [IV], are desirably contained in the three-pack type organopolysiloxane-based curing composition, in the total amount of 0.1 to 200 parts by weight, preferably 20 to 100 parts by weight, based on 100 parts by weight of the organopolysiloxane (c1) in the component (c1).

The silicone oil (c4) may be contained in one of the main agent (c1), the curing agent component (c2) and the curing accelerator component (c3) of the three-pack type organopolysiloxane-based curing composition or in two or more of them, so long as it is consequently contained in the above amount in the three-pack type organopolysiloxane-based curing composition.

When the amount of the silicone oil (c4) is in the above range, a (antifouling) coating film (namely, finish coat) having excellent antifouling property and film strength tends to be obtained. If the amount thereof is less than the lower limit of the above range, antifouling property is sometimes lowered. If the amount thereof exceeds the upper limit of the above range, film strength is sometimes lowered.

### Third organopolysiloxane-based antifouling composite coating film

The third organopolysiloxane-based antifouling composite coating film (also referred to as "third composite coating film") of the invention is constituted of an old antifouling coating film (G) which is present on a base surface and should be subjected to repair painting or repainting and a new antifouling coating film which is formed closely on a surface of the old antifouling coating film (G).

That is to say, in the third composite coating film, an old antifouling coating film (G) and a new antifouling coating film are closely laminated on a base in an order of base/old antifouling coating film (G)/new antifouling coating film. The third composite coating film mainly differs from the second composite coating film in that an organopolysiloxane-based antifouling composite coating film (new antifouling coating film) is provided on a surface of an old antifouling coating film that has been already present and bonded to the base surface, and the third composite coating film is the same as the second composite coating film except that on the surface of the old antifouling coating film (G) is formed the second composite coating film ((A)/(B)/(C)) that is a new antifouling coating film in this invention.

Next, a preferred embodiment of the old antifouling coating film (G) that becomes a base for the new antifouling coating film is described.

### Old antifouling coating film (G)

The old antifouling coating film (G) is a coating film which has been already formed and remains on a base surface of an object to be coated, such as a ship, a marine structure, a fishing tackle or a fishing net, particularly remains on a base surface of a steel ship, and is a coating film which suffers peeling or abrasion because of running of a ship or exposure to seawater or freshwater and needs repair painting or repainting in order to protect the base or prevent adhesion of aquatic organisms onto the base surface.

In the present invention, the "old antifouling coating film (G)", namely, a former antifouling coating film that should be subjected to repair painting or repainting, is for example the following old antifouling coating film (g1), (g2), (g3) or (g4) or the later-described old antifouling coating film (g5). Of these, preferable is at least one antifouling coating film selected from the following old antifouling coating films (g1), (g2), (g3) and (g4), from the viewpoints that interlaminar bond strength between this film and a "new antifouling coating film" formed on its surface is high, bond property is excellent, increase of film thickness of a new antifouling coating film is possible, and selection of an eco-friendly new antifouling coating film is possible.
(g1) An antifouling coating film formed from an antifouling paint containing an unsaturated carboxylic acid silyl ester copolymer;
(g2) An antifouling coating film formed from an antifouling paint containing a non-crosslinking or crosslinking copolymer having a (meth)acrylic acid metal salt unit;
(g3) An organotin polymer-based antifouling coating film; and
(g4) An antifouling coating film formed from an antifouling paint containing one or more water-soluble resins selected from rosin and its derivatives.

Next, the old antifouling coating films (g1) to (g4) are described in detail.

### (g1) Old antifouling coating film formed from antifouling paint containing unsaturated carboxylic acid silyl ester copolymer

The antifouling coating film (g1) formed from an antifouling paint containing an unsaturated carboxylic acid silyl ester copolymer is, for example,
an antifouling coating film formed by applying and curing an antifouling paint containing unsaturated carboxylic acid silyl ester copolymer and the like described in Japanese patent Laid-Open Publication No. 196957/2004, Japanese patent Laid-Open Publication No. 261816/2003, Japanese patent Laid-Open Publication No. 183567/2003, Japanese patent Laid-Open Publication No. 256176/2002 or Japanese patent Laid-Open Publication No. 206069/2002 previously proposed by the present applicant, or
an antifouling coating film formed by applying and curing an antifouling paint containing an organosilicon ester group-containing polymer (specifically, (meth)acrylic acid ester copolymer, maleic acid ester copolymer and fumaric acid ester copolymer each having triorganosilicon ester group) and the like described in Japanese patent Laid-Open Publication No. 279455/1999 proposed by Nippon Oil & Fats Corporation or a pamphlet of International Publication No. WO 01/081489 corresponding to Japanese patent application No. 578566/2001.

One of the unsaturated carboxylic acid silyl ester copolymers used for forming the old antifouling coating film (g1) is a polymerizable unsaturated carboxylic acid silyl ester-containing copolymer described in the paragraphs [0055] to [0061] of Japanese Patent Laid-Open Publication No. 256176/2002.

That is to say, there can be mentioned a copolymer obtained by copolymerizing a polymerizable unsaturated carboxylic acid silyl ester monomer represented by the following formula (g10) and an unsaturated monomer copolymerizable with said monomer.

A¹-COO-Si(L¹L²L³) (g10)

In the formula (g10), A¹ is an unsaturated bond-containing organic group, such as CH₂=C(CH₃)-, CH₂=CH-, HOOC-CH=CH- or HOOC-CH=C(CH₃)- (-COOH may form a metal salt or an ester), and L¹, L² and L³ may the same or different and are each any one of a chain alkyl group, an alicyclic alkyl group, an aromatic hydrocarbon group, an aralkyl group and substituted groups thereof each of which has 1 to 20 carbon atoms.

Of such unsaturated carboxylic acid silyl ester copolymers used for forming the old antifouling coating film (g1), preferable is a silyl ester copolymer having a constituent unit derived from silyl (meth)acrylate of the following formula:

CH₂=C(R¹)-COO-SiR²R³R⁴ (g1)

wherein R¹ is hydrogen or a methyl group, and R², R³ and R⁴ are each an alkyl group of 1 to 20 carbon atoms.

### (g2) Old antifouling coating film formed from antifouling paint containing non-crosslinking or crosslinking copolymer having (meth)acrylic acid metal salt unit

The old antifouling coating film (g2) formed from an antifouling paint containing a non-crosslinking or crosslinking copolymer having a (meth)acrylic acid metal salt unit is, for example, an antifouling coating film obtained by applying and curing an antifouling paint containing "a polymerizable unsaturated carboxylic acid metal salt constituent unit-containing copolymer containing no hydroxyl group bonded to a metal atom" and the like described in the paragraphs [0021] to [0032] of Japanese Patent Laid-Open Publication No. 256176/2002 previously proposed by the present applicant.

That is to say, as the copolymer used for forming the old antifouling coating film (g2), there can be mentioned a copolymer having, in a molecule, a constituent unit derived from a polymerizable unsaturated carboxylic acid metal salt represented by the following formula (g20):

A¹-COO-M-Lₙ (g20)

wherein A¹ is an organic group containing an unsaturated bond represented by any of the formulas CH₂=C(CH₃)-, CH₂=CH-, HOOC-CH=CH- and HOOC-CH=C(CH₃)- (COOH may form a metal salt or an ester), M is a metal atom, L is an organic acid residue -OCOR² (R² is any one of a chain alkyl group, an alicyclic alkyl group, an aromatic hydrocarbon group, an aralkyl group and an unsaturated hydrocarbon group, such as CH₂=C(CH₃)- or CH₂=CH-, each of which has 1 to 25 carbon atoms), and n is a number of "valence of the metal M - 1".

Of such non-crosslinking or crosslinking copolymers having a (meth)acrylic acid metal salt unit, a copolymer having a constituent unit derived from organic monobasic acid metal (meth)acrylate of the following formula (g2) is preferable as the copolymer used in the formation of the old antifouling coating film (G).

CH₂=C(R¹)-COO-M-O-CO-R² (g2)

wherein M is a divalent metal, R¹ is hydrogen or a methyl group, and R² is an organic monobasic acid residue.

In the present invention, the crosslinking copolymer having a (meth)acrylic acid metal salt unit, which is used for forming the old antifouling coating film (G), is preferably a crosslinking copolymer having a constituent unit derived from metal di(meth)acrylate of the following formula:

CH₂=C(R¹)-COO-M-O-CO-C(R¹)=CH₂ (g21)

wherein M is a divalent metal, and two R¹ are each independently hydrogen or a methyl group.

### (g3) Organotin polymer-based antifouling coating film

Examples of the organotin polymers (resin components) for forming the organotin polymer-based old antifouling coating film include homopolymers or copolymers of organotin-containing unsaturated monomers described in the paragraph [0003] of Japanese Patent Laid-Open Publication No. 176125/1998 (see Japanese Patent Publication No. 21426/1965, Japanese Patent Publication No. 9579/1969, Japanese Patent Publication No. 13392/1971, Japanese Patent Publication No. 20491/1974, Japanese Patent Publication No. 11647/1976, Japanese Patent Publication No. 12049/1976, Japanese Patent Publication No. 48170/1977), and organotin (co)polymers described in Japanese Patent Laid-Open Publication No. 200189/1994 (paragraph [0010]), U.K. Patent No. 1,589,246 and U.S. Patent No. 4,021,392.

For example, the organotin-based copolymer described in U.K. Patent No. 1,589,246 is an organotin-based copolymer wherein 50 to 80% by weight of constituent units of at least one triorganotin salt of an olefin unsaturated carboxylic acid and the residual amount (20 to 80% by weight) of constituent units of at least one olefin unsaturated comonomer are present.

In the present invention, of such conventional organotin polymers, trialkylorganotin copolymers (number of carbon atoms of alkyl group: 1 to 10, preferably 3 to 6) are desirable, and particularly, tributyltin polymers have been most frequently used and are most preferable because the resulting film exhibits excellent bonding to a coating film formed thereon and excellent film strength.

### (g4) Antifouling coating film formed from antifouling paint containing water-soluble resin

The antifouling coating film (g4) is formed from an antifouling paint containing a water-soluble resin (i).

In the present invention, the antifouling coating film (g4) may be formed from an antifouling paint containing the water-soluble resin (i) and a water-slightly soluble resin (ii). Although the ratio between the water-soluble resin (i) and the water-slightly soluble resin (ii) in the antifouling coating film is not specifically restricted, the water-soluble resin (i) is frequently contained in an amount of about 10 to 90 parts by weight in the total 100 parts by weight of the resins (i) and (ii).

The water-soluble resin (i) is, for example, rosin or its derivative. Examples of the rosins and their derivatives include those described in the paragraph [0119] of Japanese Patent Laid-Open Publication No. 3776/2002 and the paragraph [0073] of Japanese Patent Laid-Open Publication No. 26729/2001 previously proposed by the present applicant.

That is to say, examples of the rosins include gum rosin, wood rosin and tall oil rosin, and any of them is employable in the invention. Examples of the rosin derivatives include disproportionated rosin, low-melting point disproportionated rosin, hydrogenated rosin, polymerized rosin, maleic rosin, aldehyde modified rosin, polyoxyalkylene ester of rosin, reduced rosin (rosin alcohol), metal salts of rosin (e.g., copper salt, zinc salt or magnesium salt of rosin) and rosin amine. These rosins and their derivatives are used singly or in combination of two or more kinds.

The antifouling coating film (g4) containing the rosin or the like as a resin component (vehicle, matrix) is an antifouling coating film of "dissolution matrix type" or "hydration decomposition type". The antifouling coating films (g1), (g2) and (g3) are films of hydrolysis type, and when the polymer present on the film surface comes into contact with seawater, it undergoes hydrolysis reaction to thereby perform self dissolution and surface renewal, whereby antifouling performance is exhibited.

Examples of the water-slightly soluble resins (ii) include vinyl chloride resin, modified vinyl resin (e.g., vinyl acetate-based resin), epoxy resin, acrylic resin, non-crosslinking or crosslinking copolymer having (meth)acrylic acid metal salt unit, and unsaturated carboxylic acid silyl ester copolymer.

When an epoxy-based sealer coat (A), a tie coat (B) and an organopolysiloxane-based finish coat are formed in this order on the surface of the old antifouling coating film (G) such as the antifouling coating film (g1), (g2), (g3) or (g4), excellent antifouling property and interlaminar bond property are exhibited.

### Organopolysiloxane-based old antifouling coating film (g5)

An old antifouling coating film other than the old coating films (g1) to (g4) is, for example, an organopolysiloxane-based old antifouling coating film (g5).

The organopolysiloxane-based old antifouling coating film (g5) exhibits excellent bonding to any of a tie coat (B) and a finish coat (C). The antifouling coating film (g5), however, exhibits poor bonding to the epoxy-based sealer coat (A). Therefore, when a tie-coat (B) and a finish coat (C) are provided in this order on the surface of the organopolysiloxane-based old antifouling coating film (g5) without forming an epoxy-based sealer coat (A) so as to form a layer structure of (g5)/(B)/(C) or (g5)/(C), an antifouling composite coating film having excellent antifouling property and bond property can be formed.

The organopolysiloxane-based old antifouling coating film (g5) is, for example, an old antifouling coating film formed by condensing organopolysiloxane having condensing functional groups at both ends of a molecule, which is described in Japanese Patent No. 2522854 and Japanese Patent Laid-Open Publication No. 181509/2001 previously proposed by the present applicant, or an old antifouling coating film obtained by applying and curing an antifouling agent composition containing oxyalkylene group-containing chain organopolysiloxane (i.e., polyether modified silicone oil) described in Japanese Patent Laid-Open Publication No. 176576/2001.

In the present invention, the organopolysiloxane-based old antifouling coating film (g5) is particularly preferably an antifouling coating film obtained by condensing organopolysiloxane having condensing functional groups at both ends of a molecule, which is "organopolysiloxane (A)" described in the paragraphs [0029] to [0042] of Japanese Patent Laid-Open Publication No. 181509/2001.

More specifically, the organopolysiloxane used for forming the old antifouling coating film (G) is desirably represented by the following formula [α], similarly to the organopolysiloxane [α] contained in the moisture-curing organopolysiloxane-based composition for forming the tie coat.

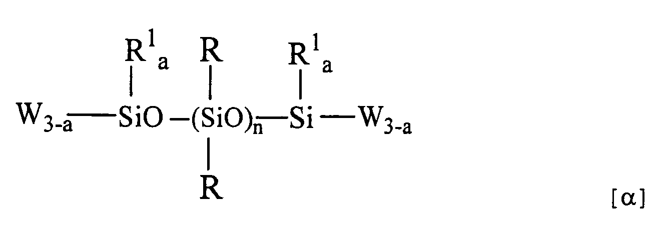

In the formula [α], W is a hydroxyl group (-OH) or a hydrolyzable group, R¹ and R are each independently an unsubstituted or substituted monovalent hydrocarbon group of 1 to 12 carbon atoms, plural R¹ or plural R may be the same or different, n is an integer of 5 or more, and a is 0, 1 or 2.

When a in the formula [α] is 0 or 1, W is desirably a hydrolyzable group, and when a is 2, W is desirably a hydroxyl group (-OH).

This organopolysiloxane [α] is the same as the organopolysiloxane (b1) that is the aforesaid tie coat-forming material, or "organopolysiloxane (b1) having condensing functional groups at both ends of a molecule" in a tie coat (B) of the below-described new antifouling coating film, or the organopolysiloxane for forming the main agent component (c1) in the aforesaid finish coat (C). The organopolysiloxane-based old antifouling coating film and the below-described new antifouling coating film contain the same polymer component and tend to have excellent bond property.

### New antifouling coating film

The new antifouling coating film is preferably formed on a surface of the above-mentioned old antifouling coating film (G), and desirably has the same structure as the layer (A)/layer (B)/layer (C) structure of the aforesaid second organopolysiloxane-based composite coating film of the invention.

That is to say, the new antifouling coating film consists of an epoxy-based sealer coat (A), a tie coat (B) and an organopolysiloxane-based finish coat (C), and is formed by bonding the films (layers) (A), (B) and (C) in such a manner that they are laminated in this order from the base side toward the surface that comes into contact mainly with seawater (old antifouling coating film (G) / (A) / (B) / (C) (surface layer)).

In the new antifouling coating film, the thickness of the sealer coat (A) is not specifically restricted, but the thickness thereof is, for example, about 50 to 500 µm, the thickness of the tie coat (B) is, for example, about 50 to 200 µm, the thickness of the finish coat (C) is about 75 to 300 µm, and the total thickness of these films is, for example, about 250 to 1000 µm.

### Sealer coat, particularly epoxy-based sealer coat (A)

To the undercoating film (A), detailed description previously given in the section of "Base and undercoating film" is preferably applied as it is.

That is to say, for the sealer coat (A) which constitutes the new antifouling coating film and is directly bonded to the old antifouling coating film (G), such a zinc-based shop primer or such an epoxy resin-based anticorrosion paint as previously described is preferable.

### Tie coat (B)

To the tie coat, detailed description previously given in the section of "Tie coat for organopolysiloxane-based antifouling coating film" is preferably applied as it is.

The tie coat (B) to constitute the new antifouling coating film is also referred to as a "bonding film" or a "primer coat", and is formed as an intermediate coating layer on a surface of the sealer coat (A), namely, undercoating film (layer A), prior to formation of an organopolysiloxane-based antifouling coating film (layer C) that is an outermost layer.

The tie coat (B) is formed by applying and curing such a specific moisture-curing organopolysiloxane-based composition as previously described.

### Finish coat (C)

The finish coat (C) formed on a surface of the tie coat (B) is obtained by applying and curing an organopolysiloxane-based antifouling paint, and particularly to a preferred embodiment of the finish coat, detailed description previously given in the section of "Finish coat (C)" is preferably applied as it is.

### EFFECT OF THE INVENTION

According to the present invention, prior to formation of an organopolysiloxane-based antifouling coating film which substantially contains no antifouling agent and is a small burden to the environment on a surface of a base or an undercoating film, a specific tie coat (bonding film, primer coat) is formed on the surface of the base or the like. Therefore, the base or the undercoating layer such as a primary rust-preventive coating film present below the lower surface of the tie coat and the organopolysiloxane-based antifouling coating film, which substantially contains no antifouling agent, is a small burden to the environment and becomes an outermost layer (finish coat), can be firmly bonded with the tie coat. Moreover, because the tie coat itself has a certain thickness and is formed from an organopolysiloxane-based paint that is a small burden to the environment, a composite coating film having a large thickness, excellent antifouling property and excellent interlaminar bond strength can be readily formed by providing a finish coat on the tie coat surface.

According to the present invention, further, because the tie coat and the organopolysiloxane-based antifouling coating film (finish coat) are laminated in this order on a surface of a base or an undercoating film to form a composite coating film, the base or the undercoating film (layer) and the finish coat can be firmly bonded with the tie coat. Moreover, the antifouling coating film (layer) as an outermost layer has small surface free energy (surface tension), and therefore, it is prevented from adhesion of marine organisms and exhibits excellent fouling-release property.

Furthermore, in a preferred embodiment of the composite coating film of the invention, an antifouling agent is not substantially contained in any of the coating films (layers), and therefore, the composite coating film is a small burden to the environment and is highly safe for human beings, animals and plants.

In particular, the second organopolysiloxane-based antifouling composite coating film wherein the undercoating film, particularly a primary rust-preventive coating film such as an epoxy-based zinc-rich primer, is provided on the base surface exhibits the same effects as those of the first composite coating film, namely, enhancement of interlaminar bond strength between the base and the finish coat, excellent antifouling performance and almost no burden to the environment because of no content of an antifouling agent. In addition, the second composite coating film is superior to the first composite coating film in rust prevention and the like.

In the case where a paint containing a silane coupling agent is used for forming the tie coat or each layer of the composite coating film, adhesion (interlaminar bond strength) between the layers, e.g., between the base or the undercoating layer and the tie coat or between the tie coat and the finish coat, tends to be further improved.

In the case where an unreactive silicone oil is contained in the tie coat or the finish coat, the silicone oil exudates onto the film surface with time. Therefore, adhesion of marine organisms can be much more efficiently inhibited, and antifouling performance tends to become excellent. Because the silicone oil itself has no toxicity, a burden to the environment is not increased.

The third composite coating film of the invention is formed by coating an old antifouling coating film (former antifouling coating film) for repair painting or repainting, and this composite coating film can be increased in film thickness by selecting a new antifouling coating film and exhibits excellent bonding between the old coating film and the new antifouling coating film and excellent antifouling property.

The thickness of the old antifouling coating film (G) varies depending on the erosion rate or the portion of the film and is not uniform in many cases. The new antifouling coating film is desirably formed so as to have a smooth finished appearance and have the same thickness and the same layer structure as those of the second composite coating film.

### EXAMPLES

The tie coat for an organopolysiloxane-based antifouling coating film, the composite films, etc. of the present invention are further described with reference to the following examples, but it should be construed that the invention is in no way limited to those examples.

### Test examples of tie coat and first and second organopolysiloxane-based antifouling composite coating films of the invention

### 1. Preparation of test paint

### 1-1. Preparation of organopolysiloxane-based tie coat (B)

### Test Example B_{A}

### Ketoxime group-containing organopolysiloxane (b0-iii) (20000 mPa·s)

400 g of dimethylpolysiloxane both ends of a molecule of which were capped with hydroxyl groups and 11 g of vinyltris(methylethylketoximino)silane were mixed at room temperature to perform reaction, whereby organopolysiloxane (b0-iii) represented by the following formula (b0), in which a ketoxime group had been introduced and which had a viscosity of 20000 mPa·s was obtained. 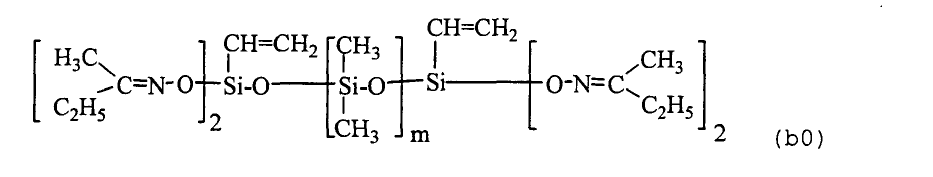 (m: number of recurring units)

### Heat-treated organopolysiloxane (b2-2)

Then, to 43 parts by weight of the ketoxime group-containing organopolysiloxane (b0-iii) placed in a first container, 2 parts by weight of hydrophobic silica were added, and they were mixed and stirred at 150°C for 2 hours to obtain heat-treated organopolysiloxane (b2-2).

### Ketoxime group-containing organopolysiloxane (b0-ii) (5000 mPa·s)

Separately, 400 g of dimethylpolysiloxane both ends of a molecule of which were capped with hydroxyl groups and 11 g of vinyltris(methylethylketoximino)silane were mixed at room temperature to perform reaction, whereby ketoxime group-containing organopolysiloxane (b0-ii) having a viscosity of 5000 mPa·s (component (b1) in Table 1) was obtained.

In a second mixing container (disper, dispersing device), 19.5 parts by weight of xylene and 31 parts by weight of the ketoxime group-containing organopolysiloxane (b0-ii) were placed, and they were sufficiently mixed.

### Moisture-curing organopolysiloxane-based composition (B_{A}) for tie coat

To the xylene solution of ketoxime group-containing organopolysiloxane (b0-ii) in the second mixing container, the heat-treated organopolysiloxane (b2-2) prepared in the first container was added as shown in Test Example B_{A} in Table 1, and they were sufficiently mixed.

Thereafter, 4 parts by weight of polydimethylsiloxane (1000 mPa·s) as the component (c4) were added, followed by sufficient mixing.

Then, to the mixture was added 0.5 part by weight of methyltriacetoxysilane as a crosslinking agent (silane coupling agent) of the component (b3), and they were mixed for 30 minutes until the resulting mixture became homogeneous, whereby a moisture-curing organopolysiloxane-based composition (B_{A}) for a tie coat was obtained.

### Test Examples B_{B}-B_{L}

Moisture-curing organopolysiloxane-based compositions (B_{A}) to (B_{L}) for a tie coat were each obtained in the same manner as in Test Example B_{A}, except that the components shown in Table 1 were used in amounts (part(s) by weight) shown in Table 1.

More specifically, "heat-treated organopolysiloxane" as the component (b2-2) was prepared in a first container in the same manner as above.

That is to say, to ketoxime group-containing organopolysiloxane (b0-i, 2000 mPa·s), (b0-ii, 5000 mPa·s) or (b0-iii, 20000 mPa·s) prepared in a first container in the same manner as above, a given amount of hydrophobic silica and/or hydrophilic silica was added, and they were mixed and stirred at 150°C for 2 hours to obtain heat-treated organopolysiloxane (component (b2-2)).

Separately, in a second (vacant) mixing container (different mixing stirring device), a solvent shown in Table 1 was placed in an amount shown in Table 1.

Then, to the mixing container was fed an extender pigment (hydrophobic silica, calcium carbonate) as one component of the components (b2-1) or an extender pigment as an arbitrary component (in case of B_{D}) in an amount shown in Table 1, followed by sufficient mixing at room temperature.

Thereafter, a coloring pigment as the component (b4) was added, followed by sufficient mixing at room temperature.

Then, "organopolysiloxane" as the component (b1) was added, followed by sufficient mixing at room temperature.

Then, organopolysiloxane (for non-heating) as one component of the components (b2-1) was added, followed by sufficient mixing at room temperature.

The "heat-treated organopolysiloxane" prepared as the component (b2-2) in the first container was introduced into the second mixing container, followed by sufficient mixing at room temperature.

Then, a silane coupling agent as the component (b3) was added, followed by sufficient mixing at room temperature.

Finally, a silicone oil as the component (c4) was added, followed by sufficient mixing at room temperature. Thus, moisture-curing organopolysiloxane-based compositions (B_{B}) to (B_{L}) for a tie coat according to the invention were obtained. Regarding a component that is not added in Table 1, the relevant step in the above preparation example is omitted.

### 1-2. Preparation of organopolysiloxane-based finish coat (C)

The finish coat (paint) has a composition shown in Table 2 and contains a main agent (c1), a curing agent component (c2) and a curing accelerator component (c3) prepared in the following manner.

### Main agent (c1)

Dimethylpolysiloxane (any of f₀₁ to f₀₃) of the following formula, both ends of a molecule of which were capped with hydroxyl groups, and silica were mixed at room temperature for 2 hours to obtain room temperature-treated organopolysiloxane (f). 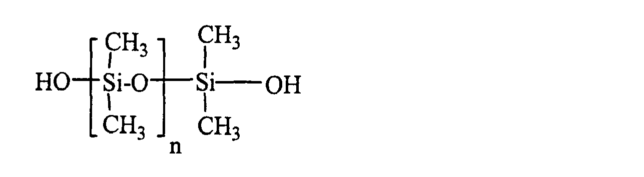 (n: number of recurring units)

The room temperature-treated organopolysiloxane (f), a methylphenyl silicone oil (g), a coloring pigment (h) and a solvent (i) were used in amounts shown in Table 2, and they were sufficiently mixed and dispersed by the above stirring device so as to make the mixture homogeneous, whereby a main agent (c1) of a finish coat was obtained.

### Curing agent component (c2)

Tetraethoxysilane, its low condensate, a methylphenyl silicone oil (g) and a solvent (i) were used in amounts shown in Table 2, and they were sufficiently mixed and dispersed by a stirring device so as to make the mixture homogeneous, whereby a curing agent (c2) for a finish coat was obtained.

### Curing accelerator component (c3)

Dibutyltin dilaurate and a solvent (i) were used in amounts shown in Table 2, and they were sufficiently mixed and dispersed by a stirring device so as to make the mixture homogeneous, whereby a curing accelerator (c3) for a finish coat was obtained.

### Pretreatment for coating

Immediately before coating, the components for a finish coat obtained as above were mixed and dispersed by a stirring device to obtain organopolysiloxane-based finish coats (C_{M}) to (C_{U}).

Using the tie coat (B_{D}) and the finish coat (C) prepared as above, a composite coating film (laminate of sandblasted steel plate/epoxy-based primer
(A)/organopolysiloxane-based tie coat
(B_{D})/organopolysiloxane-based finish coat(C)) was prepared in the following manner. The composite coating film was evaluated on interlaminar bond strength, antifouling property and the like in the following manner.

The tie coat (B) was also evaluated on anti-sagging property, leveling property, interlaminar bond strength and the like.

### 2. Coating with test paint

### 2-1. Coating with epoxy-based primer (A)

A surface of a sandblasted steel plate (30 cm (length) × 10 cm (width) × 2300 µm (thickness)) was coated with "BANNOH 500" (available from Chugoku Marine Paints, Ltd., epoxy-based rust-preventive primer) at room temperature by a spray coating machine (trade name: iwata WIDER SPRAY GUN, model number: W-77-2G) so that the dry film thickness should become 125 µm. Thereafter, the resulting layer was further coated with the epoxy-based rust-preventive primer in the same thickness as above to give a primer coating film having a total thickness of 250 µm (125 µm × 2).

### 2-2. Coating with organopolysiloxane-based tie coat (B_{D})

Prior to formation of a finish coat, a surface of the dried epoxy-based primer was coated with the organopolysiloxnae-based tie coat (B_{D}) (paint) shown in Table 1 by the same spray coating machine as above so that the dry film thickness should become 100 µm, to form a primer coating film (layer), namely, a tie coat.

### 2-3. Coating with organopolysiloxane-based finish coat (C)

A surface of the dried (or semi-cured) tie coat (B_{D}) was coated with an organopolysiloxane-based finish coat (paint) shown in Table 2 by the same spray coating machine as above so that the dry film thickness should become 150 µm.

### 3. Evaluation of tie coat

### 3-1. Evaluation of anti-sagging property of tie coat

A test plate coated with "BANNOH 500" in the above manner was stood upright, and it was coated with any one of the tie coat compositions (B_{A}) to (B_{L}) shown in Table 1 by spray coating so that the dry film thickness should become 200 µm. Then, sagging of the coating film was visually observed.

### 3-2. Evaluation of leveling property of tie coat

An epoxy-based primer coating film (A) obtained by coating a base surface with an epoxy primer "BANNOH 500" twice so that the total thickness should become 250 µm (125 µm × 2) was coated with any one of the tie coats (B_{A}) to (B_{L}) shown in Table 1 in a thickness of 200 µm. Immediately after the coating, the undried coating film was scratched with a wire having a diameter of 2 mm so that the tip of the wire should reach "BANNOH 500" to give a scratch mark. The coating film in this state was dried, and leveling property of the film was visually evaluated.

### 3-3. Interlaminar bond strength between primer (layer) and tie coat (layer)

An epoxy-based primer coating film (A) obtained by coating a base surface with an epoxy primer "BANNOH 500" twice so that the total thickness should become 250 µm (125 µm × 2) was coated with any one of the tie coats (B_{A}) to (B_{L}) shown in Table 1 in a thickness of 100 µm.

On the tie coat surface, six cut lines were made in parallel at intervals of 2 mm, and then six cut lines were further made at intervals of 2 mm so that these cut lines should meet the previous cut lines at 90° (right angles), whereby 25 (5x5) lattice squares were formed.

Onto the squares, a pressure-sensitive silicone tape (manufacturer, seller: Nitto Denko Corporation, model: No. 360UL) was stuck, then the tape was peeled off, and the number of residual squares of the composite coating film was counted. The bond strength (peel strength) between the primer (layer) and the tie coat (layer) was evaluated based on the number of residual squares (number of residual squares/25). (Table 1, Test Examples B_{A} to B_{L} of the invention)

The results are set forth in Table 1.

**Table1 Composition of tie coat (B), Anti-sagging property of tie coat (B), Bond strength of tie coat (B)**

| | Compounding component (part(s) by weight) | Tie coat | | | | | | | | | | | |
|---|---|---|---|---|---|---|---|---|---|---|---|---|---|
| | | B_{A} | B_{B} | B_{C} | B_{D} | B_{E} | B_{F} | B_{G} | B_{H} | B_{I} | B_{J} | B_{K} | B_{L} |
| (b1) Component Organopolysiloxane | Oxime group-containing organopolysiloxane (b0-iii), 20000 mPa.s | | | | | | | 5 | | | | | |
| | Oxime group-containing organopolysiloxane (b0-ii), 5000 mPa.s | 31 | | | | | | 5 | 75 | | | | |
| | Oxime group-containing organopolysiloxane (b0-i), 2000 mPa.s | | | | | | 55 | | | | | | |
| (b2-1) Component Organopolysiloxane + Extender pigment, without heating | Oxime group-containing organopolysiloxane (b0-iii), 20000 mPa.s | | | | | 53 | | | | 22 | | | |
| | Oxime group-containing organopolysiloxane (b0-ii), 5000 mPa.s | | 4.8 | | | | | | | | | | |
| | Oxime group-containing organopolysiloxane (b0-i), 2000 mPa.s | | | 2.8 | | | | | | 54 | | 64 | 66 |
| | Hydrophobic silica | | 0.2 | 0.2 | | 2 | | | | | | 3 | |
| | Calcium carbonate | | 2.5 | | | | | | | 2.5 | | 3 | 9 |
| Extender pigment | Hydrophobic silica | | | | 19 | | | | | | | | |
| | Calcium carbonate | | | | 7 | | | | | | | | |
| (b2-2) Component Organopolysiloxane + Extender pigment, with heating | Oxime group-containing organopolysiloxane (b0-iii), 20000 mPa.s | 43 | | | 45 | 14.6 | | | | | 73 | | |
| | Oxime group-containing organopolysiloxane (b0-ii), 5000 mPa.s | | 55 | | | | 9.5 | | | | | | |
| | Oxime group-containing organopolysiloxane (b0-i), 2000 mPa.s | | | 56 | | | | 70 | | | | | |
| | Hydrophobic silica | 2 | 2 | 11 | 1 | 0.2 | 0.5 | 5 | | | 2 | | |
| | Hydrophilic silica | | 3 | | 3 | 0.2 | | | | | | | |
| (C4) Silicone oil | Polydimethylsiloxane, 1000 mPa.s | 4 | | | | | | | 5 | | | | |
| (b3) Component Crosslinking agent (silane coupling agent) | Vinyltriethoxysilane | | 0.5 | 0.5 | | | 0.5 | | 0.5 | | | 0.5 | |
| | Methyltriacetoxysilane | 0.5 | | | 0.5 | | | | | 0.5 | 0.5 | | 0.5 |
| | 3-Aminopropyltrimethoxysilane | | | | | 0.5 | | 0.5 | | | | | |
| (b4) Component Coloring pigment component | Titanium white | | 2.5 | 2.5 | | | 5 | | | 2.5 | | 5 | 5 |
| | Black iron oxide | | | 2.5 | | 5 | | 5 | | | 5 | | |
| Solvent | Xylene | 19.5 | 29.5 | 24.5 | 24.5 | 24.5 | 29.5 | 9.5 | 19.5 | 18.5 | 19.5 | 24.5 | 19.5 |
| | Total (part(s) by weight) | 100.0 | 100.0 | 100.0 | 100.0 | 100.0 | 100.0 | 100.0 | 100.0 | 100.0 | 100.0 | 100.0 | 100.0 |
| Properties | Anti-sagging property (*1) | 3 | 5 | 4 | 5 | 4 | 3 | 3 | 3 | 3 | 5 | 3 | 2 |
| | Leveling property (*2) | 3 | 4 | 4 | 4 | 5 | 5 | 5 | 5 | 5 | 2 | 5 | 5 |
| | Interlaminar bond strength (number of residual squares/25) | 25/2 | 25/2 | 25/2 | 25/2 | 25/2 | 25/2 | 25/2 | 25/2 | 25/2 | 25/2 | 25/2 | 25/2 |

| | | | | | | | | | | | | | |
|---|---|---|---|---|---|---|---|---|---|---|---|---|---|
| *1: Evaluation criteria of anti-sagging property (Table 1) 5: Sagging of a coating film is not observed at all. 4: Although sagging of a coating film is very partially observed, the length of sag is not more than 1 mm. 3: Although sagging of a coating film is observed all over the film, the length of sag is not more than 1 mm. 2: Sagging of a coating film is observed all over the film, and the length of sag is not less than 3 mm. 1: Sagging of a coating film occurs all over the film, and a prescribed dry film thickness (200 µm) cannot be retained. *2: Evaluation criteria of leveling property (Table 1) 5: Scratch mark completely disappears. 4: Scratch mark is very slightly confirmed. 3: Scratch mark is confirmed by depression and protrusion of a coating film. 2: Depression and protrusion of a coating film due to scratch mark are considerably conspicuous. 1: Scratch mark remains, and an undercoating film can be confirmed. | | | | | | | | | | | | | |

### 4. Evaluation of finish coat

### 4-1. Peel strength between tie coat (layer) and finish coat (layer)

An epoxy-based primer coating film (A) obtained by coating a base surface with an epoxy primer "BANNOH 500" twice so that the total thickness should become 250 µm (125 µm × 2) was coated with the tie coat (B_{D}) shown in Table 1 in a thickness of 100 µm.

Then, the surface of the tie coat (B_{D}) was coated with any one of the finish coats (C_{M}) to (C_{U}) having compositions shown in Table 2 to form a composite coating film.

On the composite coating film surface, six cut lines were made in parallel at intervals of 2 mm, and then six cut lines were further made at intervals of 2 mm so that these cut lines should meet the previous cut lines at 90° (right angles), whereby 25 (5×5) lattice squares were formed.

Onto the squares, a pressure-sensitive silicone tape was stuck, then the tape was peeled off, and the number of residual squares of the composite coating film was counted. The bond strength (peel strength) between the tie coat (layer) and the finish coat (layer) was evaluated based on the number of residual squares (number of residual squares/25).

### 4-2. Antifouling property of composite coating film

After the composite coating film was dried for 7 days, it was immersed and allowed to stand still in Miyajima Bay in Hiroshima Prefecture for 30 months to perform immersion test, and adhesion of fouling organisms was visually observed to evaluate antifouling property. (Test Examples C_{M} to C_{S} of the invention, Comparative Test Examples C_{T} to C_{U})

The results are set forth in Table 2.

**Table 2 Composition of finish coat (C), Bond (peel) strength of finish coat (C), Antifouling property of composite coating films**

| Composition (part(s) by weight) | | | Finish coat (C) | | | | | | | | |
|---|---|---|---|---|---|---|---|---|---|---|---|
| | | | C_{M} | C_{N} | C_{O} | C_{P} | C_{Q} | C_{R} | C_{S} | C_{T} | C_{U} |
| Main agent (c1) of finish coat | | | | | | | | | | | |
| | Room temperature-treated organopolysiloxane (f) | Organopolysiloxane (f01), 20000 mPa.s | 46 | | | | | 60 | | 30 | |
| | | Organopolysiloxane (f02), 5000 mPa.s | | 46 | | | 50 | | | | 55 |
| | | Organopolysiloxane (f03), 2000 mPa.s | | | 58 | 60 | | | 50 | | |
| | | Silica | 5 | 10 | 5 | 10 | 10 | 3 | 10 | | |
| | Silicone oil (g) | | 14 | 14 | 5 | | | | | 35 | 5 |
| | Pigment component (h) | Titanium white (h) | | | 5 | | 10 | | 5 | | 5 |
| | | Calcium carbonate (h) | 5 | 5 | | 5 | | | | | 5 |
| | | Black iron oxide (h) | | | | | | 10 | | 5 | |
| | Solvent (i) | Xylene (i) | 7 | 7 | 2 | 5 | 5 | 7 | 12 | 7 | 7 |

| Curing agent component (c2) of finish coat | | | | | | | | | | | |
|---|---|---|---|---|---|---|---|---|---|---|---|
| | | Tetraethoxysilane | 3 | | 5 | | | 5 | 3 | 8 | |
| | | Low condensate of tetraethoxysilane | | 3 | | 5 | 1 | | | | 3 |
| | | Silicone oil (g) | | | 10 | 5 | 10 | | 5 | | 5 |
| | | Xylene (i) | 10 | 10 | 5 | 5 | 9 | 10 | 10 | 10 | 10 |

| Curing accelerator component (c3) of finish coat | | | | | | | | | | | |
|---|---|---|---|---|---|---|---|---|---|---|---|
| | | Dibutyltin dilaurate | 1 | 1 | 1 | 1 | 1 | 1 | 1 | 1 | |
| | | Xylene | 5 | | 4 | 4 | | | 4 | 4 | 5 |
| | | Acetylacetone | 4 | 4 | | | 4 | 4 | | | |
| Properties of composite coating film | | Interlaminar bond strength (number of residual squares/25) | 25/25 | 25/25 | 25/25 | 25/25 | 25/25 | 25/25 | 25/25 | 8/25 *1 | 25/25 *2 |
| | | Antifouling property | 4 | 5 | 4 | 4 | 5 | 5 | 5 | 2 | 2 |
| Notes *1: Coating film properties were bad, and it was difficult to form a finish coat having a thickness of 150 µm. | | | | | | | | | | | |
| *2: Curing of a coating film was slow, and handling of the film was difficult. | | | | | | | | | | | |

### Evaluation criteria of antifouling property (Table 2)

5: Although adhesion of extremely thin slime is observed, adhesion of animal species is not observed.
4: Although adhesion of slime is observed, adhesion of animal species is not observed.
3: Although adhesion of heavy slime is observed, adhesion of animal species is not observed.
2: Fouling with animal species is observed.
1: Adhesion of animal species is observed all over the coating film.

### Comparative Example S

As an undercoating material, "BANNOH 500" was applied in the same manner as above (125 µm × 2 = 250 µm (thickness)), and then any one of the tie coats (B_{A}) to (B_{L}) (compositions) shown in Table 1 was applied in a thickness of 100 µm. (The finish coat of Table 2 was not applied.)

Then, the resulting coating film was dried for one week under the conditions of 23°C and 55%RH, and antifouling property was evaluated. As a result, adhesion of slime and laver was confirmed on all of the coating films.

### Comparative Example T

As an undercoating material, "BANNOH 500" was applied in the same manner as above (125 µm × 2 = 250 µm (thickness)), and then any one of the aforesaid finish coats (C_{M}) to (C_{U}) (compositions) was applied in a thickness of 150 µm. (The tie coat of Table 1 was not applied.)

Then, the resulting coating film was dried for one week under the conditions of 23°C and 55%RH, and interlaminar bond property was evaluated. As a result, interlaminar bond property of all of the coating films was poor.

### Comparative Example U

In the formation of the same composite coating film as in Example C_{M} or the like, a finish coat composition excluding organopolysiloxane (c1) (main agent of a finish coat) was applied as the finish coat (C). As a result, the finish coat composition was very liable to sag, and it was difficult of form a coating film having a thickness of 150 µm.

### Comparative Example V

In the formation of the same composite coating film as in Example C_{M} or the like, a finish coat composition excluding "a curing agent component (c2) containing tetraalkoxysilicate or its condensate" was applied as the finish coat (C). As a result, the coating film was not completely cured though it was dried for one week under the conditions of 23°C and 55%RH, and handling of the paint was difficult.

### Comparative Example W

In the formation of the same composite coating film as in Example C_{M} or the like, a finish coat composition excluding "a curing accelerator component (c3) containing a metallic compound such as dibutyltin dilaurate" was applied as the finish coat (C). As a result, the coating film was not completely cured though it was dried for one week under the conditions of 23°C and 55%RH, and handling of the paint was difficult.

### Test examples of new antifouling coating film (third composite coating film) formed on old antifouling coating film surface

### 5-1. Preparation of antifouling agent elusion type paint (Gc)

As shown in Table 3, a zinc acrylate resin or a silyl acrylate resin was mixed with cuprous oxide, an organic antifouling agent, a coloring pigment (titanium white), an extender pigment (talc, zinc white), various additives (anti-sagging agent, anti-settling agent) and a solvent (xylene) to prepare antifouling agent elusion type paints (Gc1 to Gc8).

As the zinc acrylate resin, one prepared in accordance with "Preparation Example 1" described in the paragraph [0130] of Japanese Patent Laid-Open Publication No. 196957/2004 was used, and as the silyl acrylate resin, one prepared in the same manner as in "Preparation Example of silyl (meth)acrylate copolymer (A2)" of "Preparation Example 30" described in the paragraph [0152] of the above publication was used. Processes for preparing the above resins are described below.

### Preparation of metal-containing monomer for synthesizing zinc acrylate resin

A metal-containing monomer was prepared in the same manner as in "Metal-containing monomer a1-1" in "Preparation Example 1" described in the paragraph [0130] of Japanese Patent Laid-Open Publication No. 196957/2004 previously proposed by the present applicant.

That is to say, in a four-necked flask equipped with a condenser, a thermometer, a dropping funnel and a stirrer, 85.4 parts of propylene glycol methyl ether (PGM) and 40.7 parts of zinc oxide were placed, and they were heated to 75°C with stirring. Subsequently, a mixture consisting of 43.1 parts of methacrylic acid (MAA), 36.1 parts of acrylic acid (AA) and 5 parts of water was dropwise added at a uniform rate over a period of 3 hours through the dropping funnel. After the dropwise addition was completed, the reaction solution turned transparent from opaque white. Then, stirring was further carried out for another two hours, and then 36 parts of propylene glycol methyl ether were added to obtain a transparent mixture solution A containing a metal-containing monomer (a1-1). In the resulting mixture solution, the amount of the metal-containing monomer (a1-1), which was a component capable of forming a coating film (solid), namely, a component excluding a solvent (referred to as a "solid matter"), was 44.8% by weight, and the amount of the solvent was 55.2% by weight (total amount: 100% by weight).

### Preparation of zinc acrylate resin (one kind of metal-containing copolymer)

The copolymer was prepared in the same manner as in "Preparation of metal-containing copolymer A1-1" of "Preparation Example 7" described in the paragraph [0136] of Japanese Patent Laid-Open Publication No. 196957/2004 previously proposed by the present applicant.

That is to say, in a four-necked flask equipped with a condenser, a thermometer, a dropping funnel and a stirrer, 15 parts of propylene glycol methyl ether, 57 parts of xylene and 4 parts of ethyl acrylate were placed, and they were heated to 100°C with stirring. Subsequently, a transparent mixture consisting of 1 part of methyl methacrylate, 66.2 parts of ethyl acrylate, 5.4 parts of 2-methoxyethyl acrylate, 52 parts of the mixture solution A obtained by the above preparation example, 10 parts of xylene, 1 part of a chain transfer agent (Nofmer MSD, available from Nippon Oil & Fats Corporation), 2.5 parts of AIBN (azobisisobutyronitrile, available from Japan Hydrazine Company Inc.) and 7 parts of AMBN (azobismethylbutyronitrile, available from Japan Hydrazine Company Inc.) was dropwise added at a uniform rate over a period of 6 hours through the dropping funnel. After the dropwise addition was completed, 0.5 part of t-butyl peroctoate and 7 parts of xylene were dropwise added over a period of 30 minutes, followed by stirring for 1 hour and 30 minutes. Thereafter, 4.4 parts of xylene were added to obtain a light yellow transparent resin composition. The amount of a heating residue (resin content) in the resin composition was 45.6%, Gardner viscosity was Y, and no insoluble matter was observed.

### Preparation of silyl (meth)acrylate

The copolymer was prepared in the same manner as in "Preparation example of silyl (meth)acrylate copolymer (A2)" of "Preparation Example 30" described in the paragraph [0152] of Japanese Patent Laid-Open Publication No. 196957/2004 previously proposed by the present applicant.

That is to say, in a reaction vessel equipped with a stirrer, a condenser, a thermometer, a dropping device, a nitrogen feed pipe and a heating/cooling jacket, 100 parts of xylene were placed, and the xylene was heated and stirred in a stream of nitrogen under the temperature conditions of 85°C. With keeping the same temperature, a mixture consisting of 50 parts of triisopropylsilyl acrylate, 45 parts of methyl methacrylate, 5 parts of 2-hydroxypropyl acrylate and 1 part of 2,2'-azobisisobutyronitrile as a polymerization initiator were dropwise added with the dropping device into the reaction vessel over a period of 2 hours. Thereafter, stirring was carried out at the same temperature for 4 hours, then 0.4 part of 2,2'-azobisbutyronitrile was added, and stirring was further carried out at the same temperature for 4 hours to obtain a colorless transparent reaction solution containing a silyl (meth)acrylate copolymer.

**Table 3 Composition of antifouling agent elution type paint (Gc)**

| | | | | | | | | | |
|---|---|---|---|---|---|---|---|---|---|
| Compounding component (part(s) by weight) | | Old antifouling coating film (G) | | | | | | | |
| | | Gc1 | Gc2 | Gc3 | Gc4 | Gc5 | Gc6 | Gc7 | Gc8 |

| Antifouling agent elution type paint (Gc) | | | | | | | | | |
|---|---|---|---|---|---|---|---|---|---|
| | Cuprous oxide | 50 | 50 | | 50 | 50 | | 40 | 50 |
| | Rosin | | 5 | | | 5 | | | 12 |
| | Zinc acrylate resin | 25 | 20 | 55 | | | | | |
| | Silyl acrylate resin | | | | 25 | 20 | 55 | | |
| | TBT resin | | | | | | | 35 | |
| | Vinyl chloride resin | | | | | | | | 12 |
| | Coloring pigment (titanium white) | 1 | 1 | 1 | 1 | 1 | 1 | 1 | 1 |
| | Talc | | | 10 | | | 10 | | |
| | Zinc white | 5 | 5 | 10 | 5 | 5 | 10 | 5 | 5 |
| | Organic antifouling agent | 5 | 5 | 10 | 5 | 5 | 10 | 5 | 5 |
| | Anti-sagging agent | 1 | 1 | 1 | 1 | 1 | 1 | 1 | 1 |
| | Anti-settling agent | 1 | 1 | 1 | 1 | 1 | 1 | 1 | 1 |
| | Xylene | 12 | 12 | 12 | 12 | 12 | 12 | 12 | 13 |

### 5-2. Preparation of sealer coat (A)

As shown in Table 4, a main agent component containing a bisphenol A type epoxy resin (available from Japan Epoxy Resins Co., Ltd., model number: Epicoat #834, #1001), an extender pigment (talc, aluminum paste, barium sulfate, mica), a silane coupling agent (available from Shin-Etsu Chemical Co., Ltd., model number: KBM-403), an additive (anti-settling agent: powdery polyamide wax) and a solvent (xylene, MIBK) was mixed with a curing agent component containing polyamide and a solvent (n-butanol) to prepare sealer coats (A1 to A8).

**Table 4 Composition of sealer coat (A)**

| Compounding component (part(s) by weight) | | Sealer coat (A) | | | | | | | |
|---|---|---|---|---|---|---|---|---|---|
| | | A1 | A2 | A3 | A4 | A5 | A6 | A7 | A8 |
| Main agent | | | | | | | | | |
| | Bisphenol A type epoxy #834 | 20 | | 30 | 10 | 20 | | 30 | 10 |
| | Bisphenol A type epoxy #1001 | 10 | 30 | | 20 | 10 | 30 | | 20 |
| | Talc | 30 | 30 | 30 | 30 | 30 | 30 | 30 | 30 |
| | Aluminum paste | 9 | | 9 | | 9 | | 9 | |
| | Barium sulfate | 2 | 2 | 2 | 2 | 2 | 2 | 2 | 2 |
| | Mica | | 10 | | 10 | | 10 | | 10 |
| | Coloring pigment (titanium white) | 4 | 4 | 4 | 4 | 4 | 4 | 4 | 4 |
| | Powdery polyamide wax | 1 | 1 | 1 | 1 | 1 | 1 | 1 | 1 |
| | Silane coupling agent | 0.5 | 0.5 | 0.5 | 0.5 | | | | |
| | Xylene | 4.5 | 3.5 | 4.5 | 3.5 | 5 | 4 | 5 | 4 |
| | MIBK | 9 | 9 | 9 | 9 | 9 | 9 | 9 | 9 |

| Curing agent | | | | | | | | | |
|---|---|---|---|---|---|---|---|---|---|
| | Polyamide | 9 | 9 | 9 | 9 | 9 | 9 | 9 | 9 |
| | n-Butanol | 1 | 1 | 1 | 1 | 1 | 1 | 1 | 1 |

### 5-3. Preparation of tie coat (B)

Any one of the tie coats (B_{A}) to (B_{L}) shown in Table 1 was used as the tie coat (B).

### 5-4. Preparation of organopolysiloxane-based finish coat (C)

Any one of the finish coats (C_{M}) to (C_{S}) shown in Table 2 was used as the finish coat (paint).

Using the antifouling agent elusion type paint (Gc), the sealer coat (A), the tie coat (B) and the finish coat (C) prepared as above, a composite coating film (sandblasted steel plate/epoxy-based primer (Ga)-vinyl-based binder (Gb)-antifouling agent elusion type paint (Gc)/sealer coat (A)/organopolysiloxane-based tie coat (B)/organopolysiloxane-based finish coat (C)) was prepared, and the composite coating film was evaluated on interlaminar bond strength between various layers, antifouling property of the finish coat, etc. in the following manner.

### 6. Coating with test paint

### 6-1. Coating with antifouling agent elusion type paint system (G)

A surface of a sandblasted steel plate (30 cm (length) × 10 cm (width) × 2300 µm (thickness)) was coated with "BANNOH 500" (available from Chugoku Marine Paints Ltd., epoxy-based rust-preventive primer (Ga)) at room temperature by a spray coating machine (trade name: iwata WIDER SPRAY GUN, model number: W-77-2G) so that the dry film thickness should become 200 µm.

Thereafter, "Silvax SQ-K" (available from Chugoku Marine Paints Ltd., vinyl-based binder (Gb)) was applied so that the dry film thickness should become 50 µm.

Further, a surface of the dried binder was coated with an antifouling agent elusion type paint (Gc) shown in Table 3 by the above-mentioned spray coating machine so that the dry film thickness should become 150 µm, whereby an antifouling agent elusion type composite coating film of a three-layer structure (Ga/Gb/Gc) (corresponding to old antifouling coating film (G)) was formed on a surface of the steel plate.

### 6-2. Coating with sealer coat (A)

A surface of the antifouling agent elusion type composite coating film (G) was coated with a sealer coat (paint) shown in Table 4 by the above-mentioned spray coating machine so that the dry film thickness should become 100 µm, whereby a sealer coat (layer) which was a base for bonding a silicone paint was formed.

### 6-3. Coating with organopolysiloxane-based tie coat (B)

Prior to formation of a finish coat, a surface of the dried sealer coat (A) was coated with an organopolysiloxane-based tie coat (paint) shown in Table 1 by the above-mentioned spray coating machine so that the dry film thickness should become 100 µm, whereby a primer coating film (layer B), namely, a tie coat (B) was formed.

### 6-4. Coating with organopolysiloxane-based finish coat (C)

A surface of the dried (or semi-cured) tie coat was coated with an organopolysiloxane-based finish coat (paint) indicated by any one of C_{M} to C_{S} in Table 2 by the above-mentioned spray coating machine so that the dry film thickness should become 150 µm.

### 7. Evaluation method

### 7-1 Preparation of composite coating film

### Old antifouling coating film (G)

A steel plate with a coating film, in which the antifouling agent elusion type composite coating film (G) had been formed on the steel plate surface, was immersed and allowed to stand still in Miyajima Bay in Hiroshima Prefecture for 12 months to perform immersion test, and then the coating film surface was washed with highpressure fresh water of 15 MPa. Subsequently, the coating film (old antifouling coating film (G), also referred to as "old coating film") was dried.

### New antifouling coating film (new composite coating film)

After the old antifouling coating film (G) was dried, a sealer coat (A) shown in Table 4 was applied by spray coating so that the dry film thickness should become 100 µm.

Subsequently, a tie coat (B) shown in Table 1 was applied by spray coating so that the dry film thickness should become 100 µm, and then a finish coat (C) shown in Table 2 was applied by spray coating so that the dry film thickness should become 150 µm.

The new-old composite coating film (antifouling agent elusion type composite coating film (G)/sealer coat (A)/tie coat (B)/finish coat (C)) prepared as above was evaluated on film properties in the following manner.

### 7-2. Retention of prescribed film thickness of composite coating film

In the formation of the new composite coating film on the surface of the old coating film (G), spray coating was carried out in such a manner that the dry film thickness of each of the sealer coat (A), the tie coat (B) and the finish coat (C) became twice the aforesaid thickness. The coating film of twice thickness was visually observed to confirm retention of film thickness, followed by 5-rank evaluation based on presence or absence of sagging.

In order to confirm retention of the prescribed film thickness of each coating film for constituting the composite coating film, coating was carried out in the following manner.

### (i) Test for confirming retention of prescribed film thickness of sealer coat (A)

Coating was carried out in order of old antifouling coating film (Gc3)/test sealer coat (any one of (A1) to (A8)).

### (ii) Test for confirming retention of prescribed film thickness of tie coat (B)

Coating was carried out in order of old antifouling coating film (Gc3)/sealer coat (A2)/test tie coat (any one of (B_{A}) to (B_{L})).

### (iii) Test for confirming retention of prescribed film thickness of finish coat (C)

Coating was carried out in order of old antifouling coating film (Gc3) /sealer coat (A2) /tie coat (B_{D}) /test finish coat (any one of (C_{M}) to (C_{S})).

The results are set forth in Table 5.

**Table 5 Result of retention of prescribed film thickness**

| Sealer coat | A1 | A2 | A3 | A4 | A5 | A6 | A7 | A8 | |
|---|---|---|---|---|---|---|---|---|---|
| Result 5 | 5 | 5 | 5 | 5 | 5 | 5 | 5 | 5 | |

| Tie coat | B_{A} | B_{B} | B_{C} | B_{D} | B_{E} | B_{F} | B_{G} | B_{H} | B_{I} |
|---|---|---|---|---|---|---|---|---|---|
| Result | 5 | 5 | 5 | 5 | 5 | 5 | 5 | 4 | 4 |

| Finish coat | C_{M} | C_{N} | C_{O} | C_{P} | C_{Q} | C_{R} | C_{S} | | |
|---|---|---|---|---|---|---|---|---|---|
| Result | 5 | 4 | 3 | 5 | 5 | 5 | 3 | | |

| | | | | | | | | | |
|---|---|---|---|---|---|---|---|---|---|
| <Evaluation of retention of film thickness> 5: Sagging of a coating film is not observed at all. 4: Sagging is slightly observed at the end of a test plate. 3: Sagging is observed at the end of a test plate. 2: Sagging of a coating film is observed all over the film. 1: Sagging of a coating film occurs all over the film, and a prescribed dry film thickness (200 µm) cannot be retained. | | | | | | | | | |

### 7-3. Interlaminar bond property of composite coating film

After the composite coating film (G) was formed on the surface of the steel plate base, a bond strength between the steel plate and the composite coating film (G) was measured; after the sealer coat (A) is formed on the surface of the composite coating film (G), a bond strength between the composite coating film (G) and the sealer coat (A) was measured; after the tie coat (B) was formed on the surface of the sealer coat (A), a bond strength between the sealer coat (A) and the tie coat (B) was measured; and after the finish coat (C) was formed on the surface of the tie coat (B), a bond strength between the tie coat (B) and the finish coat (C) was measured. For measuring the interlaminar bond strength, a coating film having the later-described layer structure (see (i) to (iv)) was formed on the base surface, and then the bond strength was measured and evaluated.

In the measurement of the interlaminar bond strength, on the composite coating film formed on the base surface, six cut lines were made in parallel at intervals of 2 mm, and then six cut lines were further made at intervals of 2 mm so that these cut lines should meet the previous cut lines at 90° (right angles), whereby 25 (5x5) lattice squares were formed.

Onto the squares, a pressure-sensitive silicone tape (manufacturer, seller: Nitto Denko Corporation, model: No. 360UL) was stuck, then the tape was peeled off, and the number of residual squares of the composite coating film was counted. The bond strength (peel strength) was evaluated based on the number of residual squares (number of residual squares/25).

### Evaluation of interlaminar bond property of laminated coating films

### (i) Evaluation of bond strength between base and coating film (G) composed of antifouling agent elusion type paint

Coating was carried out in order of steel material/Ga/Gb/Gc (any one of (Gc1) to (Gc8) in Table 3), and evaluation was carried out. (For example, a coating film obtained by applying and curing the antifouling agent elusion type paint (Gc1) is also referred to as "G1".)

### (ii) Evaluation of bond strength between coating film (G) and sealer coat (A)

Coating was carried out in order of steel material/Ga/Gb/Gc3/A (any one of the sealer coats (A1) to (A8) in Table 4), and evaluation was carried out. (None of the coating films (B) and (C) were present on the surface of the coating film (A).)

### (iii) Evaluation of bond strength between sealer coat (A) and tie coat (B)

Coating was carried out in order of steel material/Ga/Gb/Gc3/A2/B (any one of the tie coats (B_{A}) to (B_{L}) in Table 1), and evaluation was carried out. (The coating film (C) was not present.)

### (iv) Evaluation of bond strength between tie coat (B) and finish coat (C)

Coating was carried out in order of steel material/Ga/Gb/Gc3/A2/B_{D}/C (any one of the finish coats (C_{M}) to (C_{S}) in Table 1), and evaluation was carried out.

As shown in the above (i) to (iv), coating films were lamination-bonded on the surface of the steel material, and using a pressure-sensitive silicone tape, the aforesaid interlaminar bond strength measurement (peel test) was carried out.

The results are set forth in Table 6.

**Table 6 Result of interlaminar bond property**

| Substrate/Coating film (G) of antifouling agent elution type paint | G1 | G2 | G3 | G4 | G5 | G6 | G7 | G8 | |
|---|---|---|---|---|---|---|---|---|---|
| Bond strength | 25/25 | 22/25 | 25/25 | 25/25 | 25/25 | 25/25 | 25/25 | 25/25 | |

| Coating film (G) /Sealer coat (A) | A1 | A2 | A3 | A4 | A5 | A6 | A7 | A8 | |
|---|---|---|---|---|---|---|---|---|---|
| Bond strength | 25/25 | 25/25 | 25/25 | 25/25 | 25/25 | 25/25 | 25/25 | 25/25 | |

| Sealer coat (A) /Tie coat (B) | B_{A} | B_{B} | B_{C} | B_{D} | B_{E} | B_{F} | B_{G} | B_{H} | B_{I} |
|---|---|---|---|---|---|---|---|---|---|
| Bond strength | 25/25 | 25/25 | 25/25 | 25/25 | 25/25 | 25/25 | 25/25 | 25/25 | 25/25 |

| Tie coat (B) /Finish coat (C) | C_{M} | C_{N} | C_{O} | C_{P} | C_{Q} | C_{R} | C_{S} | | |
|---|---|---|---|---|---|---|---|---|---|
| Bond strength | 25/25 | 25/25 | 25/25 | 25/25 | 25/25 | 25/25 | 25/25 | | |

| | | | | | | | | | |
|---|---|---|---|---|---|---|---|---|---|
| <Evaluation of interlaminar bond property> Number of residual squares/25 | | | | | | | | | |

In the evaluation of bond property between the sealer coat (A) and the tie coat (B), peeling sometimes takes place initially between the coating film (G) and the sealer coat (A) (in the present tests, such peeling did not occur), and in such a case, bond property between the sealer coat (A) and the tie coat (B) is judged as excellent.

In the present tests, the old antifouling coating film (Gc3), the sealer coat (A2) and the tie coat (B_{D}) were selected so that the lower bond property (between coating film (G) and sealer coat (A)) should not be inferior to the upper bond property (bond property between sealer coat (A) and tie coat (B)).

### 7-4. Antifouling property of composite coating film

After the composite coating film was dried for 7 days, the coating film was immersed and allowed to stand still in Miyajima Bay in Hiroshima Prefecture for 30 months to perform immersion test, and adhesion of fouling organisms was visually observed to evaluate antifouling property.

The results are set forth in Table 7.

### Evaluation of antifouling property of composite coating film

### (i) Evaluation of antifouling property of each composite coating film in the present examples

Coating was carried out in order of steel material/Ga/Gb/Gc3/A2/B_{D}/C (any one of the finish coats (C_{M}) to (C_{S}) in Table 2), and evaluation of antifouling property was carried out.

### (ii) Comparative Example X-1

Coating was carried out in order of steel material/Ga/Gb/Gc3/(A2: none)/B_{D}/C1, and evaluation of antifouling property was carried out.

### (iii) Comparative Example X-2

Coating was carried out in order of steel material/Ga/Gb/Gc3/A2/(B_{D}: none)/C1, and evaluation of antifouling property was carried out.

**Table 7 (Result of antifouling property)**

| Finish coat | C_{M} | C_{N} | C_{O} | C_{P} | C_{Q} | C_{R} | C_{S} |
|---|---|---|---|---|---|---|---|
| Antifouling property | 4 | 5 | 4 | 4 | 5 | 5 | 5 |

| | | | | | | | |
|---|---|---|---|---|---|---|---|
| <Evaluation criteria of antifouling property> 5: Although adhesion of extremely thin slime is observed, adhesion of animal species is not observed. 4: Although adhesion of slime is observed, adhesion of animal species is not observed. 3: Although adhesion of heavy slime is observed, adhesion of animal species is not observed. 2: Fouling with animal species is observed. 1: Adhesion of animal species is observed all over the coating film. | | | | | | | |

### Comparative Example X-1

Coating was carried out in order of steel material/Ga/Gb/Gc3/(A2: none)/B_{D}/C_{M} on a surface of a base (steel material), and antifouling property was evaluated.

In the above coating, the tie coat (B_{D}) was applied so that the dry film thickness should become 100 µm, and the finish coat (C1) was applied so that the dry film thickness should become 150 µm. (The sealer coat (A) of Table 4 was not applied.) After the coating, the resulting composite coating film was dried for one week under the conditions of 23°C and 55%RH, and then interlaminar bond property was confirmed. As a result, interlaminar bond property between all layers was poor.

### Comparative Example X-2

Coating was carried out in order of steel material/Ga/Gb/Gc3/A2/(B_{D}: none)/C_{M} on a surface of a base (steel material), and antifouling property was evaluated.

In the above coating, the sealer coat (A2) was applied so that the dry film thickness should become 100 µm, and the finish coat (C_{M}) was applied so that the dry film thickness should become 150 µm. (The tie coat (B) of Table 1 was not applied.) After the coating, the resulting composite coating film was dried for one week . under the conditions of 23°C and 55%RH, and then interlaminar bond property was confirmed. As a result, interlaminar bond property between all layers was poor.

### INDUSTRIAL APPLICABILITY

The tie coat of the invention is interposed between a base or an undercoating layer and the organopolysiloxane-based antifouling coating film that is an outermost layer, and with the tie coat, the base and the outermost layer or the undercoating layer and the outermost layer can be firmly bonded. Moreover, the tie coat can contribute to increase of film thickness of the resulting composite coating film, and therefore, labor can be saved in the antifouling coating of an outer surface of a ship or a marine structure.

The composite coating film of the invention is formed by laminating the tie coat and the organopolysiloxane-based antifouling coating film (finish coat) in this order on a surface of a base or an undercoating film, and therefore, the base or the undercoating film (layer) and the finish coat can be firmly bonded. Moreover, the antifouling coating film (layer) on the surface has small surface free energy (surface tension), and therefore, the antifouling coating film is prevented from adhesion of marine organisms and exhibits excellent fouling-release property.

In this preferred composite coating film, further, an antifouling agent is not substantially contained in any of the films (layers), and therefore, the organpolysiloxane-based antifouling composite coating film is a small burden to the environment.

According to the invention, there is provided a new-old composite coating film formed by coating an old antifouling coating film (former antifouling coating film) for repair painting or repainting. Regarding this composite coating film, increase of film thickness is possible, bonding between the old coating film and the new antifouling coating film formed on the old coating film surface is excellent, and antifouling property is excellent. Accordingly, if a surface of a ship or an underwater structure coated with the old antifouling coating film (G) is coated with such a new antifouling coating film, the new antifouling coating film exhibits very excellent bond property to the old antifouling coating film, hardly suffers peeling, can be increased in film thickness and has excellent antifouling property.

## Claims

1. A tie coat for an organopolysiloxane-based antifouling coating film, which is formed on a surface of a base or an undercoating film prior to formation of an organopolysiloxane-based antifouling coating film and is formed from a moisture-curing organopolysiloxane-based composition comprising:
(b1) organopolysiloxane having condensing functional groups at both ends of a molecule, and/or
(b2) a curing composition formed by subjecting organopolysiloxane having condensing functional groups at both ends of a molecule and an extender pigment selected from the group consisting of silica, calcium carbonate, talc, mica, clay, kaolin and barium sulfate to contact treatment with heating or without heating.

2. The tie coat for an organopolysiloxane-based antifouling coating film as claimed in claim 1, wherein the moisture-curing organopolysiloxane-based composition further comprises a silane coupling agent (b3).

3. The tie coat for an organopolysiloxane-based antifouling coating film as claimed in claim 2, wherein the silane coupling agent (b3) is an aminosilane compound.

4. The tie coat for an organopolysiloxane-based antifouling coating film as claimed in any one of claims 1 to 3, wherein the moisture-curing organopolysiloxane-based composition further comprises a coloring pigment (b4).

5. The tie coat for an organopolysiloxane-based antifouling coating film as claimed in any one of claims 1 to 4, wherein the moisture-curing organopolysiloxane-based composition further comprises a metallic compound (b5) as a curing catalyst.

6. The tie coat for an organopolysiloxane-based antifouling coating film as claimed in claim 5; wherein the metallic compound (b5) is a tin compound or a titanium compound.

7. The tie coat for an organopolysiloxane-based antifouling coating film as claimed in any one of claims 1 to 6, wherein the organopolysiloxane (b1) having condensing functional groups at both ends of a molecule is organopolysiloxane having condensing functional groups of deoxime type.

8. The tie coat for an organopolysiloxane-based antifouling coating film as claimed in any one of claims 1 to 7, wherein the curing composition (b2) is a curing composition formed by heat-treating silica and the organopolysiloxane (b1) having condensing functional groups at both ends of a molecule.

9. The tie coat for an organopolysiloxane-based antifouling coating film as claimed in any one of claims 1 to 8, wherein the curing composition (b2) is a curing composition formed by heat-treating silica and the organopolysiloxane (b1) having condensing functional groups at both ends of a molecule at a temperature of not lower than 100°C.

10. The tie coat for an organopolysiloxane-based antifouling coating film as claimed in any one of claims 1 to 9, wherein the curing composition (b2) comprises both of a curing composition (j) formed by subjecting orgnaopolysiloxane having condensing functional groups at both ends of a molecule and the extender pigment to contact treatment with heating and a curing composition (k) formed by subjecting them to contact treatment without heating.

11. The tie coat for an organopolysiloxane-based antifouling coating film as claimed in any one of claims 1 to 10, wherein the component (b2) is contained in an amount of 1 to 100 parts by weight based on 100 parts by weight of the component (b1).

12. The tie coat for an organopolysiloxane-based antifouling coating film as claimed in any one of claims 1 to 11, wherein the silica comprises hydrophobic silica (i) and hydrophilic silica (ii), and the hydrophobic silica (i) and the hydrophilic silica (ii) are contained in a weight ratio ((i)/(ii)) of 1/99 to 99/1.

13. The tie coat for an organopolysiloxane-based antifouling coating film as claimed in any one of claims 1 to 12, wherein the silica comprises hydrophobic silica (i) only.

14. An organopolysiloxane-based antifouling composite coating film formed by laminating a tie coat (B) and an organopolysiloxane-based finish coat (C) on a base in this order from the base side toward the surface (base/(B)/(C)), wherein the tie coat (B) is a coating film formed from a moisture-curing organopolysiloxane-based composition comprising:
(b1) organopolysiloxane having condensing functional groups at both ends of a molecule, and/or
(b2) a curing composition formed by subjecting organopolysiloxane having condensing functional groups at both ends of a molecule and an extender pigment selected from the group consisting of silica, calcium carbonate, talc, mica, clay, kaolin and barium sulfate to contact treatment with heating or without heating, and
the finish coat (C) is a coating film formed from a three-pack type organopolysiloxane-based curing composition comprising:
(c1) a main agent comprising organopolysiloxane having condensing functional groups at both ends of a molecule,
(c2) a curing agent component comprising tetraalkoxysilicate or its condensate, and
(c3) a curing accelerator component comprising a metallic compound.

15. An organopolysiloxane-based antifouling composite coating film formed by laminating (A) an epoxy-based anticorrosion coating film, (B) a tie coat and (C) a finish coat on a base in this order from the base side toward the surface (base/(A)/(B)/(C)), wherein the tie coat (B) is a coating film formed from a moisture-curing organopolysiloxane-based composition comprising:
(b1) organopolysiloxane having condensing functional groups at both ends of a molecule, and/or
(b2) a curing composition formed by subjecting organopolysiloxane having condensing functional groups at both ends of a molecule and an extender pigment selected from the group consisting of silica, calcium carbonate, talc, mica, clay, kaolin and barium sulfate to contact treatment with heating or without heating, and
the finish coat (C) is a coating film formed from a three-pack type organopolysiloxane-based curing composition comprising:
(c1) a main agent comprising organopolysiloxane having condensing functional groups at both ends of a molecule,
(c2) a curing agent component comprising tetraalkoxysilicate or its condensate, and
(c3) a curing accelerator component comprising a metallic compound.

16. An organopolysiloxane-based antifouling composite coating film formed by laminating (G) an old antifouling coating film, (A) an epoxy-based sealer coat, (B) a tie coat and (C) an organopolysiloxane-based finish coat on a base in this order from the base side toward the surface (base/(G)/(A)/(B)/(C)), wherein the tie coat (B) is a coating film formed from a moisture-curing organopolysiloxane-based composition comprising:
(b1) organopolysiloxane having condensing functional groups at both ends of a molecule, and/or
(b2) a curing composition formed by subjecting organopolysiloxane having condensing functional groups at both ends of a molecule and an extender pigment selected from the group consisting of silica, calcium carbonate, talc, mica, clay, kaolin and barium sulfate to contact treatment with heating or without heating, and
the finish coat (C) is a coating film formed from a three-pack type organopolysiloxane-based curing composition comprising:
(c1) a main agent comprising organopolysiloxane having condensing functional groups at both ends of a molecule,
(c2) a curing agent component comprising tetraalkoxysilicate or its condensate, and
(c3) a curing accelerator component comprising a metallic compound.

17. The organopolysiloxane-based antifouling composite coating film as claimed in claim 16, wherein the old antifouling coating film (G) is at least one antifouling coating film selected from the group consisting of the following antifouling coating films:
(g1) an antifouling coating film formed from an antifouling paint containing an unsaturated carboxylic acid silyl ester copolymer,
(g2) an antifouling coating film formed from an antifouling paint containing a non-crosslinking or crosslinking copolymer having a (meth)acrylic acid metal salt unit,
(g3) an organotin polymer-based antifouling coating film, and
(g4) an antifouling coating film formed from an antifouling paint containing one or more water-soluble resins selected from rosin and its derivatives.

18. The organopolysiloxane-based antifouling composite coating film as claimed in claim 16, wherein the old antifouling coating film (G) is (g4) an antifouling coating film formed from an antifouling paint containing (i) one or more water-soluble resins selected from rosin and its derivatives and (ii) one or more water-slightly soluble resins selected from a vinyl chloride resin, a modified vinyl resin, an epoxy resin, an acrylic resin, a non-crosslinking or crosslinking copolymer having a (meth)acrylic acid metal salt unit, and an unsaturated carboxylic acid silyl ester copolymer.

19. The organopolysiloxane-based antifouling composite coating film as claimed in claim 17, wherein the antifouling coating film (g1) formed from an antifouling paint containing an unsaturated carboxylic acid silyl ester copolymer is an antifouling coating film formed from an antifouling paint containing a silyl ester copolymer having a constituent unit derived from silyl (meth)acrylate represented by the following formula:
CH₂=C(R¹)-COO-SiR²R³R⁴
wherein R¹ is hydrogen or a methyl group, and R², R³ and R⁴ are each an alkyl group.

20. The organopolysiloxane-based antifouling composite coating film as claimed in claim 17, wherein the antifouling coating film (g2) formed from an antifouling paint containing a non-crosslinking or crosslinking copolymer having a (meth)acrylic acid metal salt unit is an antifouling coating film formed from an antifouling paint containing a copolymer having a constituent unit derived from organic monobasic acid metal (meth)acrylate represented by the following formula:
CH₂=C(R¹)-COO-M-O-CO-R²
wherein M is a divalent metal, R¹ is hydrogen or a methyl group, and R² is an organic monobasic acid residue.

21. The organopolysiloxane-based antifouling composite coating film as claimed in claim 17, wherein the antifouling coating film (g2) formed from an antifouling paint containing a crosslinking copolymer having a (meth)acrylic acid metal salt unit is an antifouling coating film formed from an antifouling paint containing a crosslinking copolymer having a constituent unit derived from metal di(meth)acrylate represented by the following formula:
CH₂=C(R¹)-COO-M-O-CO-C(R¹)=CH₂
wherein M is a divalent metal, and two R¹ are each independently hydrogen or a methyl group.

22. The organopolysiloxane-based antifouling composite coating film as claimed in claim 17, wherein the organopolysiloxane-based antifouling coating film (g3) is an antifouling coating film formed by condensing organopolysiloxane having condensing functional groups at both ends of a molecule.

23. The organopolysiloxane-based antifouling composite coating film as claimed in any one of claims 14 to 22, wherein the metallic compound (c3) in the three-pack type organopolysiloxane-based curing composition for forming the finish coat (C) is an organotin compound.

24. The organopolysiloxane-based antifouling composite coating film as claimed in any one of claims 14 to 23, wherein at least one component of the component (c1), the component (c2) and the component (c3) in the three-pack type organopolysiloxane-based curing composition for forming the finish coat (C) further comprises (c4) organopolysiloxane having no condensing functional group.

25. The organopolysiloxane-based antifouling composite coating film as claimed in any one of claims 14 to 24, wherein the moisture-curing organopolysiloxane-based composition for forming the tie coat (B) further comprises a silane coupling agent (b3).

26. The organopolysiloxane-based antifouling composite coating film as claimed in any one of claims 14 to 25, wherein the moisture-curing organopolysiloxane-based composition for forming the tie coat (B) further comprises an aminosilane compound as a silane coupling agent (b3).

27. The organopolysiloxane-based antifouling composite coating film as claimed in any one of claims 14 to 26, wherein the moisture-curing organopolysiloxane-based composition for forming the tie coat (B) further comprises a coloring pigment (b4).

28. The organopolysiloxane-based antifouling composite coating film as claimed in any one of claims 14 to 27, wherein the moisture-curing organopolysiloxane-based composition for forming the tie coat (B) further comprises a metallic compound (b5) as a curing catalyst.

29. The organopolysiloxane-based antifouling composite coating film as claimed in any one of claims 14 to 28, wherein the moisture-curing organopolysiloxane-based composition for forming the tie coat (B) further comprises a tin compound or a titanium compound as a metallic compound (b5).

30. The organopolysiloxane-based antifouling composite coating film as claimed in any one of claims 14 to 29, wherein the organopolysiloxane (b1) having condensing functional groups at both ends of a molecule is organopolysiloxane having condensing functional groups of deoxime type.

31. The organopolysiloxane-based antifouling composite coating film as claimed in any one of claims 14 to 30, wherein the curing composition (b2) is a curing composition formed by heat-treating silica and the organopolysiloxane (b1) having condensing functional groups at both ends of a molecule.

32. The organopolysiloxane-based antifouling composite coating film as claimed in any one of claims 14 to 31, wherein the curing composition (b2) is a curing composition formed by heat-treating silica and the organopolysiloxane (b1) having condensing functional groups at both ends of a molecule at a temperature of not lower than 100°C.

33. The organopolysiloxane-based antifouling composite coating film as claimed in any one of claims 14 to 32, wherein the curing composition (b2) comprises both of a curing composition (j) formed by subjecting orgnaopolysiloxane having condensing functional groups at both ends of a molecule and the extender pigment to contact treatment with heating and a curing composition (k) formed by subjecting them to contact treatment without heating.

34. The organopolysiloxane-based antifouling composite coating film as claimed in any one of claims 14 to 33, wherein the component (b2) is contained in an amount of 1 to 100 parts by weight based on 100 parts by weight of the component (b1).

35. The organopolysiloxane-based antifouling composite coating film as claimed in any one of claims 14 to 34, wherein the silica comprises hydrophobic silica (i) and hydrophilic silica (ii), and the hydrophobic silica (i) and the hydrophilic silica (ii) are contained in a weight ratio ((i)/(ii)) of 1/99 to 99/1.

36. The organopolysiloxane-based antifouling composite coating film as claimed in any one of claims 14 to 35, wherein the silica comprises hydrophobic silica (i) only.

37. The organopolysiloxane-based antifouling composite coating film as claimed in any one of claims 14 to 36, wherein the epoxy-based anticorrosion coating film (A) or the epoxy-based sealer coat (A) contains a silane coupling agent.

38. A ship using the tie coat of any one of claims 1 to 13 or coated with the organopolysiloxane-based antifouling composite coating film of any one of claims 14 to 37.

39. An underwater structure using the tie coat of any one of claims 1 to 13 or coated with the organopolysiloxane-based antifouling composite coating film of any one of claims 14 to 37.
